# EUROPÄISCHE PATENTSCHRIFT

(11) **EP 1 141 768 B1**
(45) Veröffentlichungstag und Bekanntmachung des Hinweises auf die Patenterteilung: **23.01.2008**
(21) Anmeldenummer: 99964394.3
(22) Anmeldetag: 03.12.1999
(51) Int. Cl.: G02F 1/035

(54) **VERFAHREN ZUR GLEICHSPANNUNGSDRIFTFREIEN POLARISATIONSTRANSFORMATION UND GLEICHSPANNUNGSDRIFTFREIER POLARISATIONSTRANSFORMATOR**
METHOD FOR DIRECT VOLTAGE DROOPLESS POLARISATION TRANSFORMATION AND DIRECT VOLTAGE DROOPLESS POLARISATION TRANSFORMER
PROCEDE DE TRANSFORMATION DE POLARISATION SANS DERIVE DE TENSION CONTINUE ET TRANSFORMATEUR DE POLARISATION SANS DERIVE DE TENSION CONTINUE

(30) Priorität: 16.12.1998 DE 19858148; 16.04.1999 DE 19917381; 29.04.1999 DE 19919576
(43) Veröffentlichungstag der Anmeldung: 10.10.2001
(73) Patentinhaber: Nokia Siemens Networks GmbH & Co. KG, 81541 München (DE)
(72) Erfinder: NOE, Reinhold, D-33100 Paderborn (DE); SANDEL, David, D-33102 Paderborn (DE)
(86) Internationale Anmeldenummer: PCT/DE1999/003875
(87) Internationale Veröffentlichungsnummer: WO 2000/036459

(56) Entgegenhaltungen:
- DE-A- 19 830 990
- US-A- 5 739 943
- US-A- 5 757 984
- PATENT ABSTRACTS OF JAPAN vol. 1995, no. 02, 31. März 1995 (1995-03-31) & JP 06 308438 A (SUMITOMO METAL MINING CO LTD), 4. November 1994 (1994-11-04) -& JP 06 308438 A

## Beschreibung

Die Erfindung betrifft ein Verfahren zur gleichspannungsdriftfreien Polarisationstransformation nach dem Oberbegriff des Patentanspruchs 1 und gleichspannungsdriftfreie Polarisationstransformatoren nach dem Oberbegriff des Patentanspruches 28.

Heismann beschreibt in IEEE Journal of Quantum Electronics, Vol. 25, Nr.8, August 1989, Seite 1898 bis 1906, einen Polarisationstransformator zur kontinuierlichen Transformation eines beliebigen Einganssignales in ein definiertes Ausgangssignal.

In der älteren Patentanmeldung DE 19 830 990.2 ist ein Polarisationstransformator/Kompensator beschrieben, der auf einem doppelbrechenden Substratmaterial realisiert ist. Dieser stellt die Weiterentwicklung eines in IEEE Journal of Quantum Electronics, Vol. QE-18, Nr. 4, April 1982, Seite 767 bis 771 beschriebenen Polarisationstransformators dar.

Diese Anordnung besteht aus einem Lithiumniobatchip, der an seiner Oberfläche Elektroden aufweist. Zwischen dem Substrat und den Elektroden wird üblicherweise eine isolierende Pufferschicht angebracht, die bei der Verwendung von metallischen Elektroden die Dämpfung des optischen Signals verhindert. Bei diesem Aufbau tritt das Problem der sogenannten von Gleichspannungen verursachten DC-Drift (DC = Gleichstrom) auf. Diese entsteht dadurch, daß Pufferschichten und Elektroden unterschiedliche Verhältnisse von Dielektrizitätskonstante zur Leitfähigkeit besitzen. Durch die dielektrischen Eigenschaften von Substrat und Pufferschicht stellt sich nach Anlegen einer Gleichspannung an eine Elektrode zunächst eine durch das elektrostatische Feld gegebene Potentialverteilung ein. Im Laufe der Zeit wird sich diese ändern und in eine durch Leitfähigkeiten von Substrat und Pufferschicht verursachte Potentialverteilung übergehen. Obwohl die Spannung an den Elektroden gleich bleibt, ändert sich das Feld im Inneren des Lithiumniobatchips aufgrund der neuen Potentialverteilung, insbesondere auch im optischen Wellenleiter, so daß ein anderer als der gewünschte elektrooptische Effekt entsteht.

Eine weitere, sehr schädliche Ursache der DC-Drift wird darin vermutet, daß bei hoher eingestrahlter optischer Leistung, aber auch schon bei üblicher Leistung im Laufe der Zeit durch Absorption Ladungsträgerpaare gebildet werden. Wenn zwischen Elektroden eine Gleichspannung und somit ein elektrisches Feld anliegt, werden diese Ladungsträgerpaare durch das elektrische Feld getrennt. Dies führt zu einer Schwächung des elektrischen Feldes. Im Laufe der Zeit werden deshalb immer höhere Spannungen benötigt, um die gewünschten Polarisationstransformationen zu erzielen. Dies erschöpft entweder die Fähigkeiten der vorhandenen Spannungsquellen oder es kommt zu Überschlägen zwischen den Elektroden. Hierbei ist zu bedenken, daß man bei einem leistungsfähigen Polarisationstransformator der oben genannten Art u.U. recht hohe Spannungen bis etwa 100V benötigen kann. Die DC-Drift kann deshalb die ordnungsgemäße Funktion eines Kompensators einschränken oder sogar verhindern.

DC-Drift tritt auch in fast allen anderen Lithiumniobat-Bauelementen (Polarisationstransformatoren) mit dem Zweck der Polarisationstransformation oder PMD-Kompensation auf, für welche deshalb ebenfalls eine Lösung des Driftproblems angestrebt wird.

Bisher wurde versucht, durch verbesserte Technologie mit einer verbesserten Abstimmung von Dielektrizitätskonstanten und Leitfähigkeit der Pufferschicht, einem verlustarmen Kristall und anderen Maßnahmen das Problem zu lösen. Selbst bei Lithiumniobat-Intensitätsmodulatoren, die nur mit kleinen Spannungen betrieben werden, scheint dies nur teilweise gelungen zu sein.
Aufgabe der Erfindung ist es daher, eine relativ einfache Maßnahme zur Vermeidung der DC-Drift bei Polarisationstransformatoren und PMD-Kompensatoren anzugeben.

Diese Aufgabe wird durch ein im Anspruch 1 angegebenes Verfahren gelöst. Im unabhängigen Patentanspruch 28 wird ein geeigneter Polarisationstransformator (PMD-Kompensator) angegeben.

Vorteilhafte Weiterbildungen sind in den Unteransprüchen angegeben.

Die Lösung des Problems liegt in der Verwendung von gleichanteilsfreien Steuerspannungen. Die Architektur des Polarisationstransformators und die Steuerspannungen werden dabei so gewählt, daß die Funktion des Polarisationstransformators nicht beeinträchtigt wird. Es gibt hierzu eine große Anzahl von Ausführungsbeispielen, die aber alle nach diesem Prinzip arbeiten.

In einem Ausführungsbeispiel der Erfindung ist es besonders vorteilhaft, wenn eine differentielle Phasenmodulation zweier orthogonal polarisierter Hauptpolarisationen (principal states-of-polarization, PSP) des Polarisationstransformators vorgenommen wird. Sind die Hauptpolarisationen TE- und TM-Wellen (TE - transversal-elektrisch; TM - transversalmagnetisch), so kann dazu ein differentieller TE-TM-Phasenmodulator am Eingang eines Kompensators vorgesehen sein.

Dies hat den Vorteil, daß eine differentielle TE-TM-Phasenmodulation der eingestrahlten Lichtwelle erzeugt wird. Bei geeigneter Ausprägung dieser Phasenmodulation können die nachfolgenden TE-TM-Wandlerzellen mit gleichspannungsfreien Signalen angesteuert werden.
Vorteilhaft ist die Ansteuerung des TE-TM-Phasenmodulators mit einer Dreieckspannung niedriger Frequenz.

Hierdurch können die TE-TM-Wandlerelektroden mit gleichanteilsfreien Cosinus- bzw. Sinusspannungen (genauer: meist mit aneinandergefügten jeweils eine Periode umfassenden, abwechselnd vorwärts und rückwärts durchlaufenen Abschnitten von Sinusspannungen) angesteuert werden. Diese Wandlerspannungen werden als Cosinus- bzw. Sinusfunktionen vorgegeben, wobei die eigentliche PMD-Kompensation nur durch Änderung der Amplitude und der Phase erfolgt. Da die Dreiecksspannung ebenfalls gleichanteilsfrei gewählt werden kann, tritt in diesem Fall auch im differentiellen TE-TM-Phasenmodulator keine DC-Drift auf; allerdings wäre sie dort ohnehin nicht störend.

Zumindest ein Teil der Wandler-Steuerspannungen kann, wie auch die Steuerspannung der Phasenmodulatoren oder Modenwandler, von einer Regeleinrichtung erzeugt werden.

Alternativ zur Verwendung eines TE-TM-Phasenmodulators kann eine entsprechende differentielle TE-TM-Phasenmodulation auch durch einen oder einige, vorzugsweise im Eingangsteil des Chips gelegene TE-TM-Wandler erzeugt werden. Hierzu erhalten die nicht im Eingangsbereich des Chips angeordneten Wandlerzellen gleichspannungsfreie Steuerspannungen, während die Steuerspannungen der ersten Wandlerzellen von der Kompensationsregelung erzeugt werden.

Eine weitere Möglichkeit zur Herstellung einer differentiellen TE-TM-Phasenmodulation besteht darin, mindestens eine Wandlerzelle hinzuzufügen, welche ebenso wie die erste zur PMD-Kompensation dienende Wandlerzelle mit speziellen gleichanteilsfreien Steuerspannungen betrieben wird.

Vorteilhaft kann die Verwendung eines zweiten TE-TM-Phasenmodulators sein, um eine von der Ansteuerspannung zeitunabhängige Ausgangspolarisation zu erhalten. Analoges gilt für die anderen beschriebenen Arten zur Realisierung oder Umgehung eines TE-TM-Phasenmodulators.

Die für TE- und TM-Wellen als Hauptpolarisationen beschriebenen Verfahren lassen sich auch für andere, beispielsweise zirkulare Hauptpolarisationen einsetzen.

Als Architektur eines Polarisationstransformators, die eine gleichanteilsfreie Wahl von Steuerspannungen zuläßt, ohne daß die Funktion des Polarisationstransformators beeinträchtigt wird, ist aber auch die Erweiterung von Polarisationstransformatoren durch zusätzliche Stellelemente wie differentielle Phasenmodulatoren, Modenwandler oder zusätzliche Wandlerzellen möglich.

Die Erfindung wird anhand von Ausführungsbeispielen näher erläutert.

Es zeigen:
- Figur 1: den prinzipiellen Aufbau eines erfindungsgemäßen Kompensators,
- Figur 2: einen PMD-Kompensator mit Polarisationsstrahlteiler,
- Figur 3: eine Regeleinrichtung zur PMD-Kompensation,
- Figur 4: eine Variante erfindungsgemäßen Kompensators,
- Figur 5: ein Zeitdiagramm der Modulationswinkelfunktion,
- Figur 6: ein Zeitdiagramm der Wandler-Steuerspannungen,
- Figur 7: eine Variante mit Wandlerzelle und
- Figur 8: eine Prinzipschaltbild mit Wandlerzellen,
- Figur 9: den prinzipiellen Aufbau eines erfindungsgemäßen Polarisationstransformators,
- Figur 10: einen Schnitt durch den Polarisationstransformator nach Figur 9,
- Figur 11: einen Kompensator von Polarisationsmodendispersion mit mehreren Polarisationstransformatoren,
- Figur 12: den prinzipiellen Aufbau eines weiteren erfindungsgemäßen Polarisationstransformators,
- Figur 13: den prinzipiellen Aufbau eines anderen erfindungsgemäßen Polarisationstransformators,
- Figur 14: ein Zeitdiagramm von Steuerspannungen,
- Figur 15: eine Regeleinrichtung mit Polarisationstransformator,
- Figur 16: ein weiteres Zeitdiagramm von Steuerspannungen,
- Figur 17: einen Modenwandler oder eine Modenwandlerzelle,
- Figur 18: einen weiteren Modenwandler oder eine Modenwandlerzelle,
- Figur 19: den prinzipiellen Aufbau eines erfindungsgemäßen Polarisationstransformators mit nachgeschaltetem Polarisationsstrahlteiler,
- Figur 20: einen weiteren Kompensator von Polarisationsmodendispersion mit mehreren Polarisationstransformatoren,
- Figur 21: ein weiteres Zeitdiagramm von Steuerspannungen.

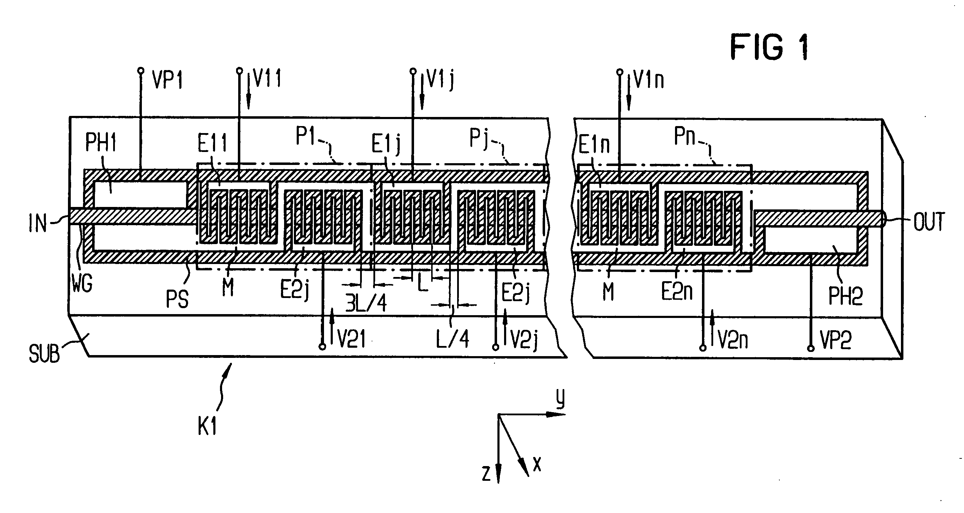

**Figur 1** zeigt eine Ausführungsform des erfindungsgemäßen Polarisationstransformators/PMD-Kompensators K1. Dieser ist als Chip mit einem Lithiumniobatsubstrat SUB realisiert. Andere in Frage kommende Materialien sind Lithiumtantalat oder ähnliche hoch doppelbrechende Materialien. Die kristallographischen Achsen Y und Z liegen in der Zeichnungsebene, die kristallographische Achse X geht in die Zeichenebene hinein (X-Schnitt). Es sind auch andere Ausführungsformen denkbar.

Ein Wellenleiter WG ist an der Chipoberfläche durch Titan-Eindiffusion entlang der kristallographischen Y-Achse (Y-Ausbreitungsrichtung) realisiert. Der Wellenleiter WG ist einmodig, so daß TE- und TM-Wellen mit einer Brechzahldifferenz von etwa 0,07 ausbreitungsfähig sind. Auf der Chipoberfläche ist zunächst eine Pufferschicht PS aus Siliziumdioxid oder einem anderen Isolator angebracht, die im Bereich des Wellenleiters nicht dargestellt ist (wenn dagegen die Elektroden optisch transparent sind, beispielsweise aus Indium-Zinn-Oxid gefertigt sind, kann auf die Pufferschicht unter Umständen verzichtet werden).

Auf die Pufferschicht sind elektrisch leitfähige Interdigitalelektroden E1j, E2j aufgedampft, die die Form eines Kammes aufweisen, dessen Zinken (Stichleitungen, Finger) quer zum Wellenleiter angeordnet sind. Eine Elektrode M mit ebenfalls quer zum Wellenleiter angeordneten Zinken verläuft meanderförmig über den gesamten Chip und kann an Masse gelegt werden (Masse-Elektrode). Ausführungsformen, in denen alle Kammelektrodenanschlüsse auf einer Seite des Wellenleiters liegen, während die Masseelektrodenkämme alle auf der anderen Seite des Wellenleiters miteinander verbunden sind, sind ebenfalls möglich. Die anderen kammförmigen Modenwandler-Elektroden E1j, E2j (j = 1, 2, ...,n), auch als Modenwandler bezeichnet, sind voneinander elektrisch isoliert. Die an den Elektroden anliegenden Steuerspannungen Vij können individuell oder in Gruppen identisch gewählt werden. Jeweils zwei Elektroden E1j und E2j, die auch jeweils mit weiteren Elektroden, welche von der jeweiligen Elektrode Abstände, die gleich einem ganzzahligen Vielfachen der Schwebungswellenlänge sind, entfernt sind, verbunden sein können, werden als TE-TM-Wandlerzelle Pj bezeichnet.

Die Moden, welche gewandelt werden, sind gleichzeitig Hauptpolarisationen (principal states-of-polarization) der daran anschließenden Wellenleiterstücke, im Ausführungsbeispiel also TE- und TM-Wellen.

Eine Spannung an einer Elektrode erzeugt ein elektrisches Feld im Wellenleiter WG, das als Funktion der Ausbreitungskoordinate Y örtlich periodisch in Kristallschnittrichtung X und entgegengesetzt hierzu verläuft. Durch die örtliche Periodizität des elektrostatischen Feldes wird eine Phasenanpassung zwischen TE- und TM-Welle erreicht, wobei sich die Modenwandlerbeiträge aufeinanderfolgender Elektrodenfinger addieren.

Die optische Welle bzw. das optische Signal OS durchläuft den Chip vom Eingang IN bis zum Ausgang OUT.

Eine Schwebungswellenlänge ist diejenige Länge, bei der der Retarder/Kompensator mit TE- und TM-Wellen als Eigenmoden gerade eine Phasenverzögerung von 360° zwischen diesen Eigenmoden aufweist. Bei einer optischen Wellenlänge von 1550nm (Nanometer) entspricht diese Schwebungswellenlänge in Lithiumniobat etwa 21µm (Mikrometer).

Die Periodenlänge der Elektrodenzinken einer Elektrode, der Abstand L, ist etwa gleich der Schwebungswellenlänge. Die Zinkenbreite und die Elektrodenabstände werden deshalb zweckmäßigerweise jeweils etwa gleich L/4 gewählt. Damit erhält man eine gleichförmige Struktur, in welcher Zinkenbreiten und Zwischenräume gleich groß sind.

Um eine TE-TM-Konversion mit variabler Phase durchführen zu können, sind jeweils nach den periodischen Zinken einer Elektrode zusätzliche Abstände von abwechselnd L/4 und 3L/4 vorgesehen. Damit erhält man zusätzliche Phasenverzögerungen zwischen TE- und TM-Wellen von 90° bzw. 270°, durch letztere wird die erstere wieder rückgängig gemacht so daß sich TE-TM-Wandlung mit unterschiedlichen Phasenwinkeln auswirkt und unterschiedliche Polarisationszustände einstellbar sind. Die Masseelektrode M hat an diesen Stellen jeweils eine Gesamtbreite von etwa L/2 bzw. L.

Ein TE-TM-Wandler, welcher gleichzeitig eine beliebige Phasenverzögerung ϕ(t) zwischen TE- und TM-Wellen erzeugen kann, ist i.a. aus mehreren oder sogar vielen solchen periodisch aufeinanderfolgenden Strukturen zusammengesetzt. Ein Beispiel dafür findet sich in F. Heismann, R. Ulrich, "Integrated-optical single-sideband modulator and phase shifter", IEEE J. Quantum Electronics 18(1982)4, pp. 767-771.
Ein TE-TM-Wandler kann aber auch aus einer durchaus endlichen, relativ geringen Anzahl elementarer Kammelektrodenpaaren zusammengesetzt sein. Dies ergibt sich aus der Patentanmeldung Aktenzeichen P 198 39 308.3 vom 28.08.98: "Polarisationstransformator mit einstellbaren Eigenmoden der Polarisationselemente", in der ein vergleichbarer physikalischer Prozeß beschrieben ist. Demnach ist die minimal erforderliche Anzahl von Kammelektrodenpaaren für volle Modenkonversion unter beliebigen Phasen gleich drei, während größere Anzahlen, beispielsweise vier bis sechs, eine größere Toleranz gegenüber nichtidealer Realisierung gewährleisten. Auch zusätzliche Wellenleiterstücke mit differentieller Phasenverzögerung und differentieller Gruppenlaufzeit zwischen zwei Hauptpolarisationen des Modenwandlers können zwischen den Wandlerzellen angebracht sein. Es können die elementaren Modenwandler (kurze Kammstücke) sogar in in weiten Grenzen beliebigen Abständen angeordnet sein, solange, beispielsweise durch zufällige Verteilung, sichergestellt ist, daß eine ausreichend große Anzahl davon bei Modenwandlung bezogen auf einen festen Ort über verschiedene Phasen verteilte modengewandelte Signale erzeugen kann. Nachteilig ist die größere erforderliche Anzahl von Steuerspannungen gegenüber der Realisierung gemäß F. Heismann, R. Ulrich, "Integrated-optical single-sideband modulator and phase shifter", IEEE J. Quantum Electronics 18(1982)4, pp. 767-771, wo lediglich zwei Steuerspannungen benötigt werden.
Erfindungsgemäß wird im Bereich des Signaleingangs (IN) des Chip eine stetige differentielle Phasenverschiebung ϕ(t) (Phasenverzögerung /Phasenmodulation) zwischen TE- und TM-Wellen vorgenommen. Diese TE- und TM-Wellen sind Hauptpolarisationen des Chip, d.h. es sind diejenigen orthogonalen Polarisationen, zwischen welchen eine maximale Gruppenlaufzeitdifferenz vorliegt.

Wesentlich ist dabei, daß ϕ(t) so gewählt wird, daß die zeitlichen Mittelwerte ihrer Kosinusfunktion cos(ϕ(t)) und ihrer Sinusfunktion sin(ϕ(t)) wenigstens näherungsweise verschwinden.

In dem ersten Ausführungsbeispiel der Erfindung sind im Bereich des Eingangs IN des Chips ein erster differentieller TE-TM-Phasenmodulator PH1 und im Bereich des Ausgangs OUT ein zweiter differentieller TE-TM-Phasenmodulator PH2 vorgesehen.

Durch Anlegen einer periodischen Spannung VP1 an den Phasenmodulator PH1 wird eine differentielle TE-TM-Phasenmodulation mit einem sich zeitlich ändernden Modulationswinkel ϕ, der Phasenverschiebung zwischen TE- und TM-Welle, erzeugt.

Unter Verwendung der elektrooptischen Koeffizienten r33 und r13, der Elektroden- und Wellenleitergeometrie und des Überlappintegrals zwischen elektrischem Feld und optischem TE- bzw. TM-Modus kann man die Proportionalitätskonstante V1 zwischen dem zeitabhängigen Modulationswinkel ϕ(t), als Phasenverschiebung oder Modulationswinkelfunktion bezeichnet, und erforderlicher Modulator-Steuerspannung (Phasenschieberspannung) VP1 = V1*ϕ(t) berechnen. Da die linearen elektrooptischen Koeffizienten r33 und r13 dominieren, ist in sehr guter Näherung von einer proportionalen Beziehung zwischen VP1 und ϕ auszugehen. Der genaue Berechnungsweg ist für den Fachmann aus Appl. Phys. Lett. 47(11), 1. Dezember 1985, Seiten 1137 bis 1139 ersichtlich. Auch in anderen Materialien kann die Phasenschieberwirkung auf ähnliche Weise berechnet werden; sie kann in jedem Fall aber auch einfach gemessen werden.

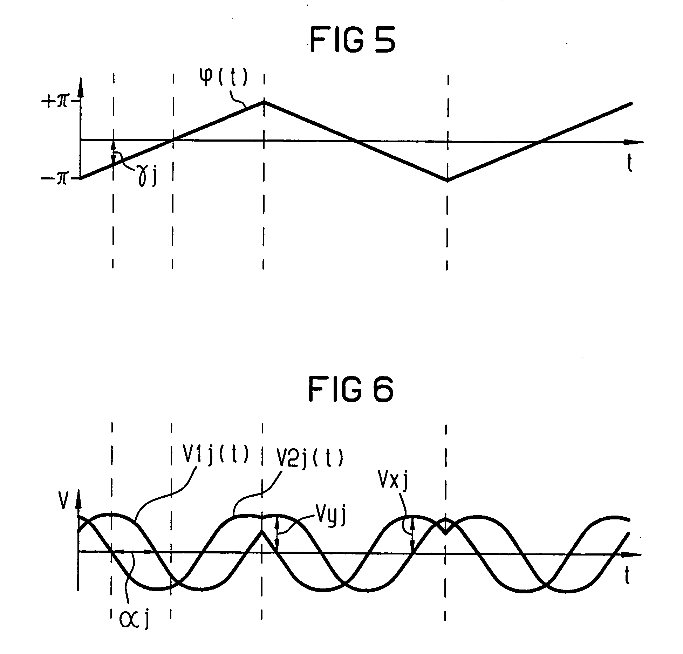

Eine günstige Maßnahme ist es, den TE-TM-Phasenmodulator mit einer Dreiecksspannung VP1 = V1*ϕ(t) anzusteuern, die durch den elektrooptischen Effekt eine ebenfalls dreieckförmige differentielle TE-TM-Phasenmodulation mit der Phasenverschiebung (ϕ(t) erzeugt, wobei der maximale Phasenunterschied zwischen TE- und TM-Welle von ±π bzw. von 2π (oder ein Vielfaches davon) beträgt. Bei dieser Modulationswinkelfunktion ϕ(t) ist auch VP1 gleichanteilsfrei (Figur 5). Es sind jedoch auch Modulator-Steuerspannungen VP1 = V1*ϕ(t) + C möglich.

Einziger Nachteil des TE-TM-Phasenmodulators ist, daß er, wenn er auf doppelbrechendem Substrat realisiert ist, auch selbst PMD (Polarisationsmodendispersion) erzeugt, wodurch der PMD-Kompensationsbereich der Anordnung etwas verringert wird.

Die beiden Elektroden von TE-TM-Wandlerzellen wurden bisher mit Gleichspannungen betrieben, die sich in der Form V1j = Vxj*cos(γj) bzw. V2j = Vyj*cos(γj - αj) bzw. V2j = Vyj*sin(γj) darstellen lassen (j = Index der TE-TM-Wandlerzelle Pj, Figur 1). αj ist ein Winkel, der später noch erläutert wird. Die Werte Vxj und Vyj sind umgekehrt proportional zur jeweiligen Zinkenanzahl der Elektroden E1j bzw. E2j zu wählen.

Erfindungsgemäß werden statt der bisher verwendeten Gleichspannungen Wandler-Steuerspannungen V1j = Vxj*cos(γj - ϕ(t) bzw. V2j = Vyj*cos(yj - αj - ϕ(t)) verwendet und dabei die Winkelfunktionen cos (ϕ(t)) und sin(ϕ(t)) zeitlich mittelwertsfrei gestaltet, wozu ϕ(t) in stetiger Weise geeignet zeitlich verändert wird. Beispielsweise wird als Phasenverschiebung ϕ(t) mit Hilfe einer gespeicherten Tabelle durch einen Digital-Analog-Wandler eine bis auf Quantisierungsfehler im wesentlichen stetige Dreiecksfunktion erzeugt ("stetig" ist für alle Funktionen in diesem Sinne zu verstehen), daß sich eine differentielle Phasenmodulation mit einem maximalen Modulationswinkel ϕ von ±π ergibt (**Figur 5**).

In **Figur 6** ist der Verlauf der Wandler-Steuerspannungen V1j und V2j, die Funktionen der Phasenverschiebung ϕ(t) sind, über der Zeitachse "t" dargestellt. Die Wandler-Steuerspannungen V1j und V2j setzen sich bei der gewählten dreiecksförmigen Phasenverschiebung ϕ(t) aus aneinandergefügten ganzen Cosinus- bzw. Sinusperioden zusammen. Bei einem Winkel von (γj - ϕ(t)) = 0 beträgt der cos (γj - ϕ(t)) =1, bei dem die Wandler-Steuerspannung V1j ihr Maximum erreicht. Die zeitlichen Mittelwerte sind gleichanteilsfrei, so daß die Elektroden E1j und E2j gleichspannungsdriftfrei arbeiten. Je nach Definition der Richtung der differentiellen Phasenverschiebung ϕ(t) kann sich eine positive oder negative Proportionalitätskonstante V1 ergeben. (Statt einer gewählten Phasenschieberspannung VP1 = V1*ϕ(t) kann stets auch eine um eine Konstante C verschobene Spannung VP1 + C gewählt werden, die sich bei Verwendung eines Phasenwinkels ϕ(t) + C/V1 ergäbe, denn wenn die Funktionen cos(ϕ(t)) und sin(ϕ(t)) zeitlich mittelwertsfrei sind, so sind es auch die Funktionen cos(ϕ(t) + C/V1) und sin(ϕ(t) + C/V1). Da der Nullpunkt des Winkels ϕ(t) aber ohnehin beliebig definiert werden kann, erscheint die Darstellung VP1 = V1*ϕ(t) als ausreichend.)

Die durch den TE-TM-Phasenmodulator verursachte Störung der Kompensation von Polarisationsmodendispersion läßt sich gerade dann vermeiden oder ausgleichen, wenn statt der üblichen Gleichspannungssignale diese TE-TM-Wandlersignale verwendet werden. Diese modifizierten Signale sind unter der vereinfachten Annahme konstanter Amplituden der Wandler-Steuerspannungen (Elektrodenspannungen) V1j, V2j und konstanter Phasenwinkel γj gleichanteilsfrei, so daß die TE-TM-Wandler driftfrei arbeiten.

Zu ergänzen ist noch, daß Wandlerzellen mit gleichlangen Wirkungslängen (gleiche Anzahl der Elektrodenzinken) auch mit gleichgroßen Wandler-Maximalspannungen betrieben werden. Normalerweise werden die Zinkenanzahlen der Elektroden E1j und E2j jeweils gleich groß gewählt. In diesem Fall kann Vxj = Vyj = V0j gewählt werden. Die zukünftigen Betrachtungen setzen einen entsprechenden symmetrischen Aufbau voraus.

Die Wandlerspannungen und die Phasenwinkel können zur Polarisationstransformation und/oder PMD-Kompensation geändert werden. In der Regel besteht keine Korrelation zwischen den erforderlichen zeitlichen Variationen und der Funktion ϕ(t).

Statt eines dreiecksförmigen Signals kann auch jedes andere stetige zeitveränderliche Signal zur Ansteuerung des Phasenmodulators gewählt werden, für welches die zeitlichen Mittelwerte der Winkelfunktionen cos(ϕ(t)) und sin(ϕ(t)) verschwinden, beispielsweise eine asymmetrische Dreieckspannung oder eine Sinusspannung, welche eine differentielle Phasenmodulation mit einem Spitzenhubwinkel von ±2,4 Radiant erzeugt oder auch eine verschliffene Rechteckspannung oder Trapezspannung, welche eine differentielle TE-TM-Phasenmodulation mit einem Spitzenhubwinkel von wenig mehr als ±π/2 erzeugt. Letztere Ausführung hat den Vorteil, daß die erforderliche Spannung VP1 oder die Länge der TE-TM-Phasenmodulatoren PH1, PH2 minimal ist.

Die Frequenz der Phasenverschiebung ϕ(t) ist prinzipiell beliebig. Denkbare Frequenzen liegen im Bereich von 1 µHz (Mikrohertz) bis 1 MHz (Megahertz). Die geringste Störung der PMD-Kompensation erhält man i.a. allerdings dann, wenn die Frequenz recht klein gewählt wird. Sie muß lediglich so groß sein, daß während einer Periode DC-Drifteffekte vermieden werden; vorzugsweise sollten folglich kleine Frequenzen im Bereich von 1 µHz (Mikrohertz) bis 1 kHz verwendet werden.

Um eine von der Phasenverschiebung ϕ(t) zeitunabhängige Ausgangspolarisation zu erhalten, ist ein zweiter TE-TM-Phasenmodulator PH2 am Ausgang des Chips entsprechend Figur 1 vorgesehen, welcher eine differentielle TE-TM-Phasenmodulation mit der Modulationswinkelfunktion -ϕ(t) erzeugt. Da die Masseelektrode des zweiten TE-TM-Phasenmodulators im Ausführungsbeispiel auf der anderen Seite des Wellenleiters liegt wie beim eingangsseitigen, kann der ausgangsseitige Phasenmodulator - gleiche Länge wie beim eingangsseitigen Phasenmodulator vorausgesetzt - mit derselben Spannung VP2 = VP1 betrieben werden. Durch den zweiten differentiellen TE-TM-Phasenmodulator PH2 kann trotz differentieller Phasenmodulation und modulierten Wandler-Steuerspannungen eine konstante Ausgangspolarisation erreicht werden. Dieses kann dann interessant sein, wenn orthogonal polarisierte Signale im Polarisationsmultiplexbetrieb übertragen werden. Wenn dagegen auf eine von (ϕ(t) unabhängige Ausgangspolarisation verzichtet werden kann, und dies ist bei vielen Anwendungsfällen gegeben, kann auf den zweiten differentiellen TE-TM-Phasenmodulator PH2 am Chipausgang verzichtet werden.

Werden Signale mit einem Polarisationsmultiplex-Übertragungsverfahren übertragen, so können die PMD-Einflüsse auf die unterschiedlichen Polarisationen gemeinsam kompensiert oder die erforderliche Anpassung der empfangenen an die geforderten Polarisationen gemeinsam vorgenommen werden. Die Aufteilung der polarisierten Signale erfolgt am Ausgang des Kompensatorbausteins. Auch kann die Anordnung selbst ohne zweiten Phasenmodulator PH2 bestimmte konstante Ausgangspolarisationen erzeugen, nämlich TE oder TM. Deshalb ist der Polarisationsmultiplexbetrieb auch ohne zweiten Phasenmodulator am Polarisatorausgang möglich. Diese Polarisationen werden am Ausgang des Chips gedemultiplext, beispielsweise mit Hilfe eines auf dem Chip integrierten TE-TM-Strahlteilers PBS.

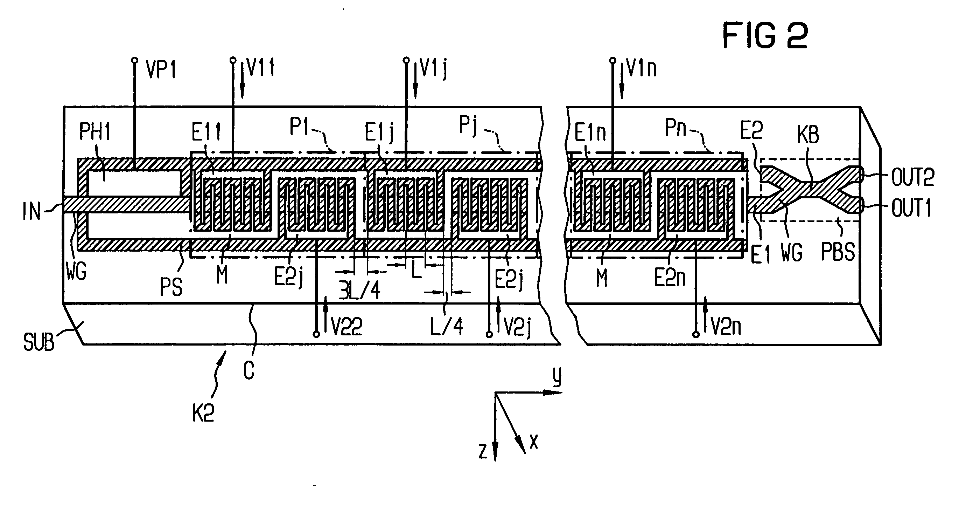

Ein entsprechendes Ausführungsbeispiel der Erfindung zeigt **Figur 2**. Bis auf den TE-TM-Polarisationsstrahlteiler PBS im Ausgangsbereich des Chip ist Figur 2, vom ausgangsseitigen Phasenmodulator abgesehen, identisch mit Figur 1. Der Polarisationsstrahlteiler besitzt die Form eines optischen Richtkopplers mit zwei Eingängen E1, E2 und zwei Ausgängen OUT1, OUT2. Die Richtkopplerstruktur ist wiederum durch Wellenleiter WG definiert. Einer der Eingänge E1 ist an den eigentlichen Polarisationstransformator oder PMD-Kompensator angekoppelt. Im Kopplungsbereich KB des Polarisationsstrahlteilers werden die Lichtwellen übergekoppelt, wobei wegen der unterschiedlichen Modenfelder und der Doppelbrechung des Kristalls TE- und TM-Wellen unterschiedlich gekoppelt werden. Bei geeigneter Dimensionierung erhält man an einem Ausgang OUT1 eine Polarisation, beispielsweise TE, während am anderen Ausgang OUT2 die dazu orthogonale, in diesem Fall TM, erscheint. An den Ausgängen OUT1 und OUT2 können zwei optische Empfänger angeschlossen werden. Ggf. können dort auch noch weitere Polarisatoren vorgesehen sein, um das Auslöschungsverhältnis der jeweils unerwünschten gegenüber der gewünschten Polarisation zu verbessern.

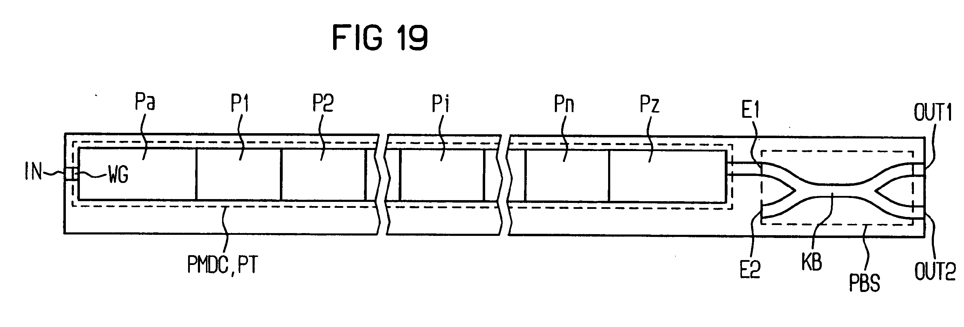

Auch weitere Ausführungsbeispiele lassen sich durch einen ausgangsseitigen Polarisationsstrahlteiler zu einem PMD-Kompensator und Polarisationsdemultiplexer ergänzen. Erfindungsgemäß wird also jeder beliebige gleichspannungsdriftfreie Polarisationstransformator PT oder gleichspannungsdriftfreie PMD-Kompensator PMDC zum Zweck der Polarisationsaufteilung in vorteilhafter Weise durch einen Polarisationsstrahlteiler PBS ergänzt. In schematischer Weise ist dies in der **Figur 19** dargestellt. Diese Teile können insgesamt auf einem Substrat SUB integriert sein, aber müssen dies nicht. Als PMD-Kompensator PMDC oder Polarisationstransformator PT der Figur 19 können insbesondere auch die anhand der Figuren 1, 4, 7, 8, 11, 12 und 13 beschriebenen Ausführungsbeispiele eingesetzt werden.

Jeder PMD-Kompensator ist gleichzeitig auch ein Polarisationstransformator. Damit einerseits die gewünschte PMD-Kompensation eintritt und andererseits die gewünschte Polarisationstransformation bis zum Eingang E1 des Polarisationsstrahlteilers PBS auftritt, ist es zweckmäßig, in der Nähe dieses Polarisationsstrahlteilers PBS gelegene Teile des PMD-Kompensators bevorzugt zum Zwecke der Polarisationstransformation für den Polarisationsdemultiplex, weiter entfernte, also in Richtung Eingang IN gelegene Teile des PMD-Kompensators bevorzugt zum Zwecke der PMD-Kompensation anzusteuern. Die erfindungsgemäße Ansteuerung dieser Teile zur Vermeidung von DC-Drift wird zusätzlich angewendet.

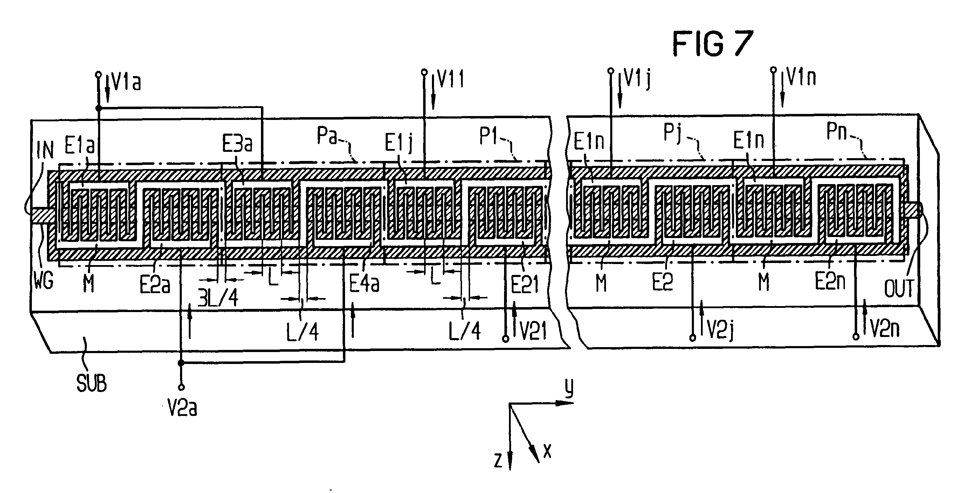

Ausführungsbeispiele von Polarisationsstrahlteilern PBS sind in Figur 7 des Beitrags H. Herrmann et al., D.A. Smith, W. Sohler, "Integrated optical, acoustically tunable wavelength filters and switches and their network applications", Proc. ECIO 1993, Neuchâtel, Switzerland, S. 10-1 bis 10-3 sowie den dort angegebenen Literaturstellen zu entnehmen. Insbesondere können statt des Kopplungsbereichs KB protonenausgetauschte Wellenleiter eingesetzt werden.

In dem Fall, daß Vxj = Vyj = V0j ist, lassen sich die Wandler-Steuerspannungen Vij (i = 1, 2; j=1, 2,....., n) entsprechend der bereits allgemein beschriebenen Steuerspannungen in der Form V1j = V0j*cos((γj-ϕ(t)) bzw. V2j = V0j*cos(γj-αj-ϕ(t)) darstellen. Dabei bestimmt die Amplitude von V0j die Stärke der TE-TM-Modenwandlung. Da zwischen benachbarten Modenwandlerelektroden jeweils ¼ oder 3/4 einer Schwebungswellenlänge zusätzlich Platz vorgesehen ist, ergibt sich in diesem Ausführungsbeispiel geometriebedingt αj = ±π/2. Die Größe γj kann ebenso wie V0j im Laufe der Zeit verändert werden, um den Erfordernissen der Polarisationstransformation oder PMD-Kompensation nachzukommen. Die Phase (γj-ϕ(t)) bzw. (γj-αj-ϕ(t)), unter der die TE-TM-Modenwandlung erfolgt, verändert sich - wegen zeitabhängigem ϕ(t) in zeitabhängiger Form - gerade entgegengesetzt zu der durch den eingangsseitigen Phasenmodulator erzeugten differentiellen TE-TM-Phasenmodulation mit dem Winkel (ϕ(t), kurz, die durch Verwendung von Wechselspannungen bewirkten Effekte verändern die PMD des Kompensatorbausteins und somit auch die PMD-Kompensationsfunktion nicht, weil sie sich diesbezüglich gegenseitig aufheben. (Der Phasenmodulation am Eingang entspricht eine Längenänderung im Eingangsbereich. Eine Änderung der Modenwandlerspannungen entspricht einer longitudinaler Verschiebung der Elektroden. Wenn die longitudinale Elektrodenverschiebung der Längenänderung im Eingangsbereich gerade entgegengesetzt ist, bleiben die Elektroden, auf den Chipanfang vor dem Phasenmodulator bezogen, an derselben Stelle, so daß auch die Polarisationstransformation und die PMD des Kompensators und somit die PMD-Kompensation dieselbe bleibt.)

Mehrere TE-TM-Modenwandlerzellen können neben der gewünschten Modenwandlung auch eine differentielle TE-TM-Phasenmodulation erzeugen, weil sie als allgemeiner elliptischer Retarder wirken. Die am Chipeingang durch den differentiellen TE-TM-Phasenschieber erzeugte Phasenverschiebung (Phasenmodulation) ϕ(t) kann in Spezialfällen oder unter dem Einfluß praktischer Unzulänglichkeiten verschiedener Art bereits von den darauf folgenden Wandlerzellen kompensiert worden sein, so daß für die weiter hinten gelegenen Wandlerzellen keine gleichanteilsfreien Steuerspannungen gewählt werden können. Um diesen Effekt zu vermeiden, können noch mehrere differentielle TE-TM-Phasenmodulatoren vorgesehen werden (dies entspricht einer Serienschaltung mehrerer Kompensatoren entsprechend Figur 1).

Bei sehr kleinen Frequenzen der Phasenmodulation (ϕ(t) ist es nicht erforderlich, alle TE-TM-Wandlerzellen mit Spannungen V0j*cos(γj-ϕ(t)) bzw. V0j*cos(γj-αj-ϕ(t)) anzusteuern. Die Ansteuerung einiger oder auch aller Wandlerzellen kann vielmehr einer Regeleinrichtung überlassen werden, die gleichzeitig die Polarisation regelt oder die PMD kompensiert. Eine Vorgabe der Wandlerspannungen in der vorstehend beschriebenen Form ist jedoch vorzuziehen, da diese sowohl das Ziel der PMD-Kompensation als auch das Ziel gleichanteilsfreier Steuerspannungen kompromißlos erreicht.

Alternativ kann man unter Verzicht auf den TE-TM-Phasenmodulator den TE-TM-Wandlerzellen, mit Ausnahme der im Chip vorne in Eingangsnähe gelegenen Wandlerzellen, Spannungen der Form V0j*cos(γj-ϕ(t)) bzw. V0j*cos(γj-αj-ϕ(t)) aufprägen. Die vorderen TE-TM-Wandler müssen nun - gesteuert vom Regelalgorithmus - eine differentielle TE-TM-Phasenmodulation mit dem Winkel ϕ(t) erzeugen.

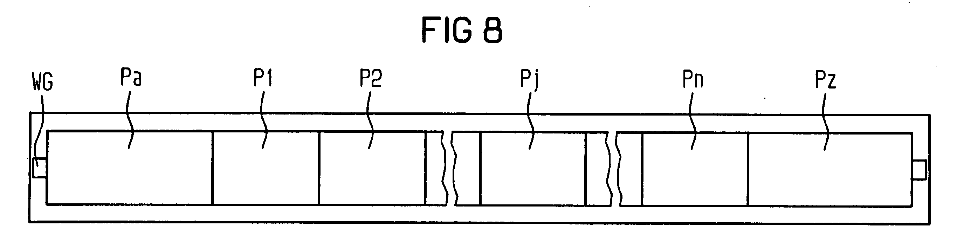

In einem weiteren Ausführungsbeispiel Figur 7 der Erfindung wird eine Möglichkeit zur Herstellung einer differentiellen TE-TM-Phasenmodulation ϕ(t) mit Hilfe eines TE-TM-Wandlers oder -Wandlerzellen ausgenutzt. Sie besteht darin, daß ein TE-TM-Wandler Pa am Eingang des Chip hinzugefügt wird (Figur 7) und bei Bedarf nicht nur nach unveränderter PMD sondern auch unveränderter Polarisationstransformationen auch ein solcher TE-TM-Wandler Pz am Ausgang des Chip hinzugefügt wird (**Figur 8**), die mit speziellen gleichanteilsfreien Steuerspannungen betrieben werden. Im Ausführungsbeispiel der Figur 7 wird ein TE-TM-Wandler gemäß F. Heismann, R. Ulrich, "Integrated-optical single-sideband modulator and phase shifter", IEEE J. Quantum Electronics 18(1982)4, pp. 767-771, eingesetzt, welcher lediglich zwei Steuerspannungen benötigt. In einem bevorzugten Ausführungsbeispiel übt jede Wandlerzelle Pa, Pz volle Modenkonversion aus, wodurch konstante Spannungen Vxa, Vya festgelegt werden. Die Wandlerelektroden erhalten Steuerspannungen V1a= Vxa*cos(γa-ϕ(t)/2) bzw. V2a = Vγa*cos(γa-αa-ϕ(t)/2). Sie sind lineare Funktionen von phasenverschobenen Kosinusfunktionen cos(γa-ϕ(t)/2), cos(γa-αa-ϕ(t)/2) der Hälfte ϕ(t)/2 der differentiellen Phasenverschiebung ϕ(t)). Da die Eigenmoden des Modenwandlers Pa bei dieser Auslegung eine Winkelkoordinate ϕ(t)/2 auf dem S2-S3-Großkreis der Poincare-Kugel einnehmen, ist auf diese Weise sichergestellt, daß eine erfindungsgemäße differentielle Phasenmodulation ϕ(t) zwischen den TE- und TM-Hauptpolarisationen des Lithiumniobatchip mit X-Schnitt und Y-Ausbreitungsrichtung erfolgt. Die Winkel αa und γa ergeben sich wie beschrieben aus der Elektrodengeometrie und dem Abstand des Wandlers Pa zu den übrigen Wandlern.

Selbstverständlich gibt es noch viele andere Möglichkeiten, eine differentielle Phasenmodulation zu erzeugen. Im vorgenannten Ausführungsbeispiel der Erfindung könnten mehrere kaskadierte statt eines differentiellen Phasenmodulators eingesetzt werden, deren differentielle Phasenmodulationen sich zum Wert ϕ(t) addieren.

Auch im zuletzt genannten Ausführungsbeispiel mit TE-TM-Modenwandlern können mehrere solcher Modenwandler mit jeweils voller Modenkonversion kaskadiert werden, wobei sich die differentiell phasenverschiebenden Wirkungen mit abwechselnd positivem und negativem Vorzeichen addieren. Auch TE-TM-Modenwandler mit nicht voller Modenkonversion können addiert werden, wobei sich die Verzögerungen bei gleicher TE-TM-Phasenverschiebung addieren. Schließlich ist auch die Kombination von TE-TM-Phasenmodulatoren und TE-TM-Modenwandlern zur Erzeugung von differentieller TE-TM-Phasenmodulation geeignet.

Neben den vorgenannten Ausführungsformen für die differentielle TE-TM-Phasenverschiebung ϕ(t) (z.B. Dreieckssignal) eignet sich ihre Erzeugung durch einen TE-TM-Wandler insbesondere dazu, um für ϕ(t) eine lineare Funktion der Zeit wählen zu können, so daß ϕ(t) = Ω*t ist, wobei Ω eine konstante Kreisfrequenz ist. Diese wird vorzugsweise niedrig im Vergleich zu den Frequenzen typischer zu kompensierender Polarisationsänderungen gewählt; vorzugsweise sollten folglich kleine Frequenzen im Bereich von 1 µHz (Mikrohertz) bis 1 kHz verwendet werden.

Will man eine von der differentielle Phasenverschiebung ϕ(t) zeitunabhängige Ausgangspolarisation erhalten, so kann ein TE-TM-Phasenmodulator PH2 am Ausgang des Chips entsprechend Figur 1 vorgesehen sein, aber es können ebensogut Wandler Pz mit voller Modenkonversion und Spannungen wie oben beschrieben auf die letzte reguläre Wandlerzelle folgen.

Je nach Ausführungsbeispiel kann es erforderlich sein, die Steuerspannungen (V1j, V2j) der regulären Wandlerzellen gegenüber einer Ausführung des Polarisationstransformators ohne differentielle Phasenverschiebung ϕ(t) im Rahmen des Regelbereichs zu verändern. Beispielsweise werden der TE-TM-Wandler 1 nach dem eingangsseitigen Wandler Pa und der TE-TM-Wandler n vor dem ausgangsseitigen Wandler Pz so angesteuert, daß sie dann volle Modenkonversion ausüben, wenn sie in Abwesenheit der Wandler Pa, Pz keine Modenkonversion ausüben sollten und umgekehrt.

Alle Ausführungsbeispiele der Erfindung funktionieren auch für den Fall, daß Polarisationsmodendispersion vernachlässigt werden kann und der driftfreie Polarisationstransformator lediglich zur Erzeugung eines bestimmten Ausgangs- aus einem gegebenen Eingangspolarisationszustand verwendet wird.

Die meisten Ausführungsbeispiele funktionieren auch im Fall in der Elektrotechnik üblicher einfacher Substitutionen wie z.B. Addition konstanter Signale oder Phasenwinkel oder Änderung des Vorzeichens von Phasenwinkeln oder Signalen.

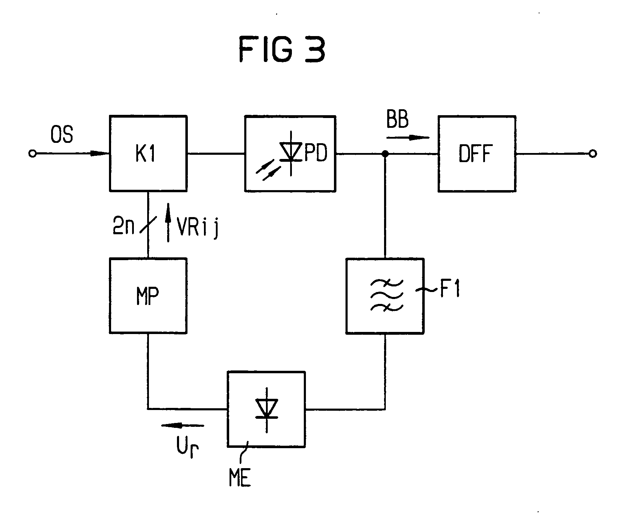

In **Figur 3** ist das Prinzip einer Regeleinrichtung dargestellt. Einem Empfangsterminal RX wird ein optisches Signal OS zugeführt. Dieses durchläuft einen PMD-Kompensator K1 und wird anschließend in einer Fotodiode PD demoduliert, der ein Entscheider DFF nachgeschaltet ist. Das am Ausgang der Fotodiode abgegebene Basisbandsignal BB wird über ein Bandpaßfilter FI einer Meßeinrichtung ME, beispielsweise einem Gleichrichter, zugeführt, die über einen Regler MP mit Hilfe von Steuerspannungen Vij den PMD-Kompensator steuert.

Die eigentliche PMD-Kompensation erfolgt dadurch, daß die Amplitudenwerte von Vij (Vxj und Vyj) bzw. V0j und die Phasenwinkel γj variiert werden. Durch den Kompensationsvorgang kann es auch zu einem kurzzeitigen Abweichung vom Ideal einer gleichanteilsfreien Steuerspannung/Elektrodenspannung kommen. Auch sind selbstverständlich zulässige Abweichungen von dem Ideal der gleichanteilsfreien Steuerspannung möglich Im Regelfall können solche Abweichungen für den Kompensationsvorgang vernachlässigt werden.

Ob man Vxj und Vyj (bzw. V0j) und γj bei der PMD-Kompensation variiert, also Parameter, die jeweils zwei Wandlerspannungen V1j und V2j gemeinsam beeinflussen können, oder ob man zu diesem Zweck einfach die Wandlerspannungen V1j und V2j jede für sich variiert, ist ohne Bedeutung, ebenso, wie es egal ist, ob man eine komplexe Zahl nach Betrag und Phase oder nach Real- und Imaginärteil darstellt.

Im einfachsten Fall wird zunächst eine der Elektrodenspannungen schrittweise variiert, wobei als Gütekriterium die gleichgerichtete Ausgangsspannung U1 gilt, die an dem Bandpaßfilter FI, das als Mittenfrequenz die halbe Schrittfrequenz aufweist, gemessen wird.

Im einzelnen erfolgt die PMD-Kompensation, indem eine oder beide Elektrodenspannungen einer Wandlerzelle versuchsweise um eine vorgegebene Größe geändert wird/werden. Die gleichgerichtete Ausgangsspannung U1 des Filters FI wird anschließend gemessen. Verbessert sich nach einer Änderung der Elektodenspannung(en) diese Spannung U1, dann wird diese Änderung beibehalten oder eine nochmalige gleichgerichtete Änderung durchgeführt. Verringert sie sich dagegen, wird die Änderung zumindest teilweise zurückgenommen oder sogar durch eine Änderung vom Ausgangspunkt in der der ursprünglichen Änderungsrichtung entgegengesetzten Richtung ersetzt. Danach werden die weiteren Elektrodenspannungen optimiert. Dabei kann es günstig sein, zunächst erst jede zweite, vierte, achte oder sechzehnte Elektrodenspannung zu optimieren, weil dies die besonders störende PMD-Anteile niedriger Ordnung am schnellsten kompensiert. Dieser Vorgang wird zyklisch wiederholt, bis das Optimum erreicht ist.
Das Maximum ist erreicht, wenn die Augenöffnung des Basisbandsignals maximal ist, also bei einer unverzerrten optimalen Übertragung. Als Maß dafür dient die gleichgerichtete Spannung U1.

Alternativ dazu kann man Veränderungen der Elektrodenspannung(en) vom bisherigen Arbeitspunkt aus probeweise in beide Richtungen durchführen. Man kann dann aus Differenzen der gleichgerichteten Spannung U1 näherungsweise einen Gradienten dieser gleichgerichteten Spannung U1 ermitteln, und sie dann in Richtung des Gradienten so verändern, daß sie einem Maximum zustrebt.

Bei der zyklischen Wiederholung des Regelungsvorgangs kann es zweckmäßig sein kann, die Beträge der an den Elektroden anliegenden zu optimierenden Spannungen zunächst etwas zu reduzieren, da ein Überschreiten der zulässigen Elektrodenspannungsbeträge so verhindert werden kann. Zusätzlich oder alternativ dazu kann die Elektrodenspannung bei jedem Durchgang begrenzt werden.

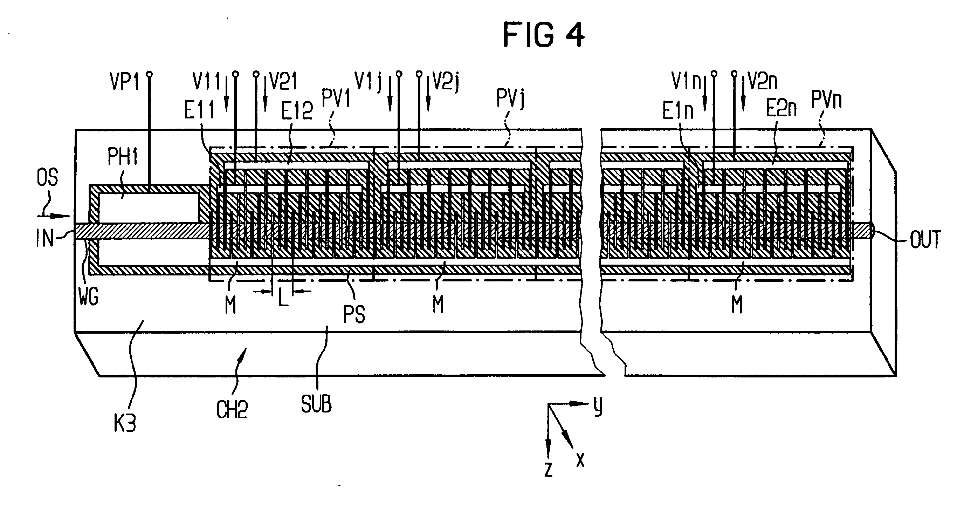

Falls man bereit ist, eine kompliziertere Verdrahtung auf dem Chip in Kauf zu nehmen, beispielsweise Überkreuzungen von elektrischen Leitungen mittels isolierender Zwischenschichten, so kann eine Variante K3 des Kompensators entsprechend Figur 4 realisiert werden. Die Zinken der Modenwandler-Elektroden E11 und E21; E12 und E22,.... bis E1n und E2n liegen hier jeweils nacheinander zwischen zwei Zinken der Masse-Elektrode M und bilden Wandlerzellen PVj. Bei gleichen Maximalstärken der elektrischen Felder, welche durch Materialkonstanten begrenzt sind, kann diese Variante Polarisationstransformation auf einer etwas kürzeren Strecke ausführen als der Polarisationstransformator nach Figur 1 und bietet daher eine größere Variabilität der Polarisationstransformation bei gleicher Gesamtlänge des Chips. Außerdem sind wegen der geringeren Elektrodenabstände die zur Erzeugung einer bestimmten Feldstärke benötigten Elektrodenspannungen geringer.

Die Periodizität der Elektrodenzinken beträgt weiterhin L, deren Breite und die Abstände betragen etwa L/6. Die Erfordernisse, Abstände L/4 und 3L/4 einzuführen entfällt. Es ist ein einziger TE-TM-Phasenmodulator PH1 am Eingang des Chips vorgesehen. Zur Ansteuerung der Elektroden werden wieder Steuerspannungen V1j= V0j*cos(γj-ϕ(t)) bzw. V2j = V0j*cos(γj-αj-ϕ(t)) verwendet. Da die Elektroden in Abständen von 1/3 einer Schwebungswellenlänge aufeinanderfolgen, ist in diesem Ausführungsbeispiel geometriebedingt αj = ±π/3. Dabei bestimmt V0j wieder die Stärke der TE-TM-Modenwandlung. Die Größe γj kann ebenso wie V0j im Laufe der Zeit verändert werden, um den Erfordernissen der PMD-Kompensation nachzukommen.

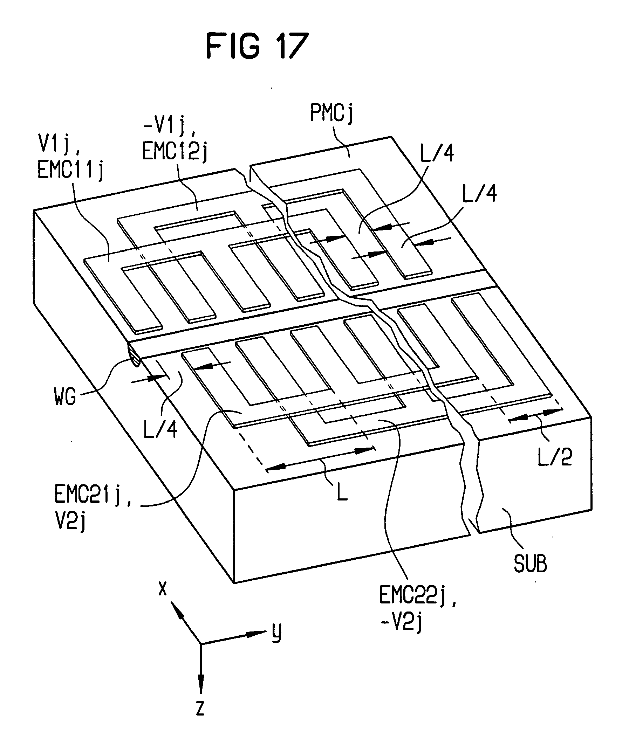

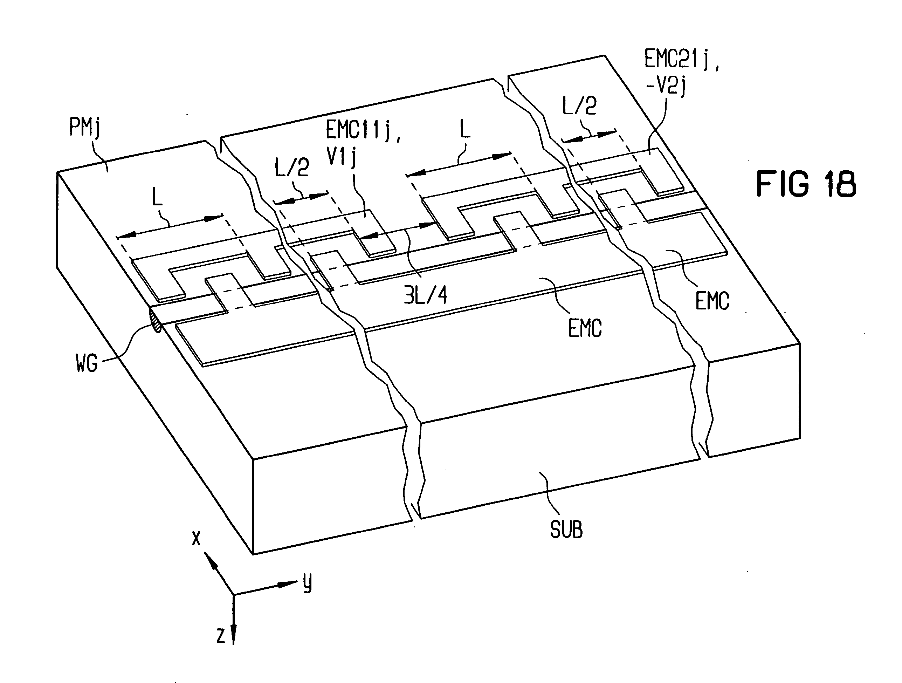

Neben X-Schnitt mit Y-Ausbreitungsrichtung eines Lithiumniobatkristalls können noch viele weitere Ausführungsbeispiele gewählt werden, beispielsweise solche in Halbleitern. Ebenso kann man Lithiumniobat mit Z-Schnitt und Y-Ausbreitungsrichtung verwenden. Gegenüber den vorbeschriebenen Ausführungsbeispielen sind kristallographische X- und Z-Achse gegeneinander vertauscht. Statt periodischer vertikaler (in X-Richtung verlaufender) Felder müssen jetzt periodische horizontale (wiederum in X-Richtung verlaufende) Felder angelegt werden. Einen derartigen Modenwandler oder eine Modenwandlerzelle PMCj zeigt **Figur 17**. Zwischen Chipoberfläche und Elektroden sowie zwischen Elektroden können die üblichen isolierenden Pufferschichten aufgebracht sein. Auf jeder Seite des Wellenleiters WG sind kammförmige Elektroden EMC11j, EMC12j, EMC21j, EMC22j angebracht. Die Elektroden EMC11j, EMC12j auf einer Seite werden mit Modenwandlerspannungen V1j bzw. -V1j beaufschlagt. Die Elektroden EMC21j, EMC22j auf der anderen Seite werden mit Spannungen V2j und -V2j beaufschlagt. Sie sind gegenüber den Elektroden auf der vorgenannten Seite um ein Viertel L/4 einer Schwebungswellenlänge L in Ausbreitungsrichtung Y verschoben. Auch die Elektrodenabstände auf einer Seite des Wellenleiters und die Elektrodenbreite beträgt etwa L/4. Die beiden kammförmigen Elektroden auf jeweils einer Seite sind durch eine isolierende Zwischenschicht an den Oberkreuzungspunkten gegeneinander isoliert, besitzen Perioden von jeweils einer Schwebungswellenlänge L und sind gegeneinander um die Hälfte L/2 einer Schwebungswellenlänge L verschoben. Durch Modenwandlerspannungen V1j und V2j und die davon abhängigen invertierten Spannungen -V1j, -V2j (d.h., die gegenüber den Spannungen V1j und V2j gerade entgegengesetzten Spannungen) kann Modenwandlung in Phase und in Quadratur ausgeübt werden, was endlose Polarisationstransformation und PMD-Kompensation erlaubt. In diesem Ausführungsbeispiel beträgt der Winkel α 90°. Dieser Modenwandler oder diese Modenwandlerzelle kann die Modenwandler(zellen) P1 ... Pz, Pa, Pz in den vorgenannten Ausführungsbeispielen ersetzen. Dies gilt nicht nur in Ausführungsbeispielen mit vor- und ggf. nachgeschalteten Modenwandlern Pa, Pz oder differentiellen Phasenschiebern PH1, PH2, sondern auch für Polarisationstransformatoren und PMD-Kompensatoren, welche bezüglich DC-Drift unempfindlich sind und derartige Einrichtungen nicht benötigen. Auch Ausführungsbeispiele z.B. mit α = 120° oder α = 60° sind durch andere Elektrodenanordnungen denkbar.
In einem anderen Ausführungsbeispiel der **Figur 18** wird eine der Modenwandlerelektroden.auf einer Seite des Wellenleiters weggelassen. Auf der anderen Seite werden beide Elektroden durch eine Masseelektrode EMC ersetzt, welche auch kammförmig ausgeführt sein kann. Dieses Ausführungsbeispiel eines Modenwandlers PMj erlaubt Modenwandlung ebenfalls in beiden Quadraturen, aber nur dadurch, daß neben einer ersten Modenwandlerelektrode EMC11j mit Spannung V1j noch eine zweite Modenwandlerelektrode EMC21j mit Spannung V2j vorgesehen ist. Die beiden Elektroden sind um ein ungeradzahliges Vielfaches 3L/4 eines Viertels L/4 einer Schwebungswellenlänge L in Ausbreitungsrichtung Y auf einem Chip SUB gegeneinander versetzt, so wie in Figur 1, dort allerdings durch die etwas anders gestalteten Elektroden E1j, E2j (j = 1 ... n) ausgeführt, dargestellt. Zur Erzielung großer in Phase und in Quadratur frei wählbarer Modenwandlungsgrade sind mehrere oder viele Modenwandlerzellen PMj zu kaskadieren.

Während die vorgenannten Ausführungsbeispiele Polarisationstransformatoren mit TE- und TM-Hauptpolarisationen und Modenwandlern betrafen, welche diese TE- und TM-Wellen ineinander umwandeln konnten, werden jetzt Ausführungsbeispiele erläutert, bei welchen modenwandelbare und Hauptpolarisationen rechts- und linkszirkulare Polarisationen sind. Die vom Modenwandler gewandelten Polarisationen sind immer auch Hauptpolarisationen (principal states-of-polarization) des zwischen Modenwandlern verlaufenden doppelbrechenden Wellenleiters.

In IEEE J. Lightwave Techn. 6(1988)7, S. 1199-1207 ist ein Polarisationstransformator beschrieben, der auf einem nicht doppelbrechenden Substratmaterial realisiert ist. Dieser kann jede beliebige Polarisation endlos in zirkulare Polarisation überführen oder umgekehrt und besitzt eine sehr geringe Verzögerung, die im Idealfall nur maximal π betragen muß. Er arbeitet als Modenwandler für zirkulare Polarisationen, wobei die Phasenverzögerung zwischen diesen zirkularen Polarisationen beliebig und endlos gewählt werden kann. Die möglichen Eigenmoden dieses Polarisationstransformators sind die linearen Polarisationen.
Ähnliche Polarisationstransformatoren finden sich in IEEE J. Lightwave Techn. 8(1990), S. 438-458 und IEEE Photon. Techn. Lett. 4(1992), S. 503-505. Jene letzteren besitzen bei Addition der Verzögerungen der einzelnen Bestandteile Verzögerungen, die 2n oder mehr betragen, können dafür aber auch jede beliebige in jede beliebige andere Polarisation überführen. Im Tagungsband zur Optical Fiber Communications Conference and International Conference on Integrated Optics and Optical Fiber Communications (OFC/IOOC '99), postdeadline paper volume, PD29, San Diego, 21-26 Feb. 1999 wurde berichtet, daß PMD-Kompensatoren aus einer Reihe von differentiellen Verzögerungssektionen aufgebaut werden können, daß die dazwischenliegenden Polarisationstransformatoren jede beliebige Polarisation in eine Hauptpolarisation (principal state-of-polarization) der darauffolgenden differentiellen Verzögerungssektion überführen können muß.
Als Verzögerungssektion eignen sich beispielsweise doppelbrechende Lichtwellenleiter (z.B. PANDA-Faser), welche lineare Hauptpolarisationen besitzen.

Erfindungsgemäß wird einem Modenwandler zirkularer Polarisationen eine Viertelwellenplatte nachgeschaltet. Bei Bedarf wird eine andere Viertelwellenplatte vorgeschaltet. Dadurch entsteht ein Polarisationstransformator, welcher lineare Polarisationen mit ±45° Erhebungswinkel ineinander umwandeln kann.

Durch Kaskadieren mehrerer solcher Polarisationstransformatoren mit dazwischengeschalteten und am Ende des letzten nachgeschalteten polarisationserhaltenden Lichtwellenleitern, welche so orientiert sind, daß sie ±45° Erhebungswinkel der linear polarisierten Hauptpolarisationen (principal states-of-polarization) aufweisen, und die außerdem zwischen diesen Hauptpolarisationen differentielle Gruppenlaufzeiten aufweisen, entsteht ein einfacher Kompensator von Polarisationsmodendispersion.

Im Bereich der Modenwandler der zirkularen Polarisationen sind jedoch die Hauptpolarisationen der vor- und/oder nachgeschalteten polarisationsmodendispersiven Elemente zirkular.

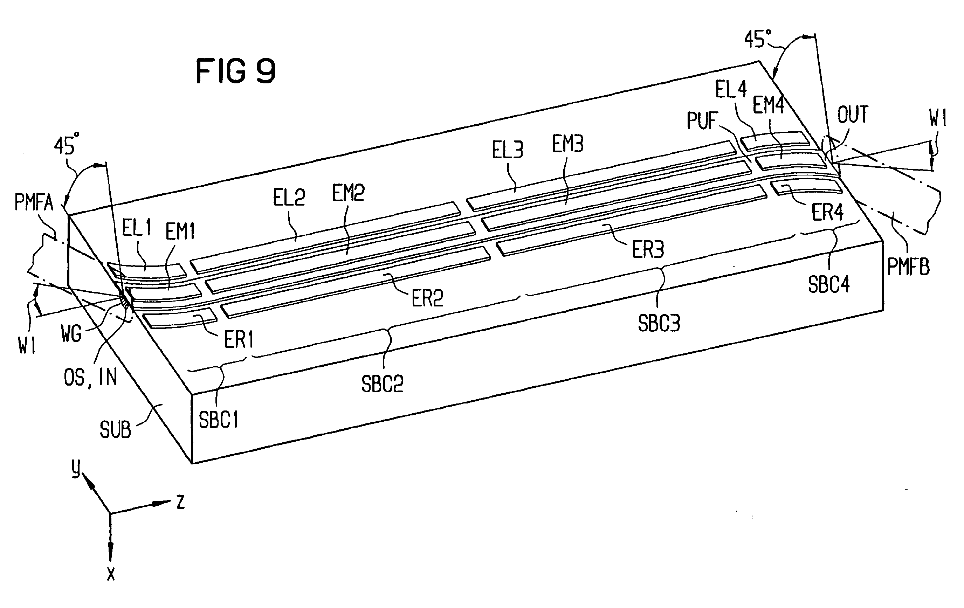

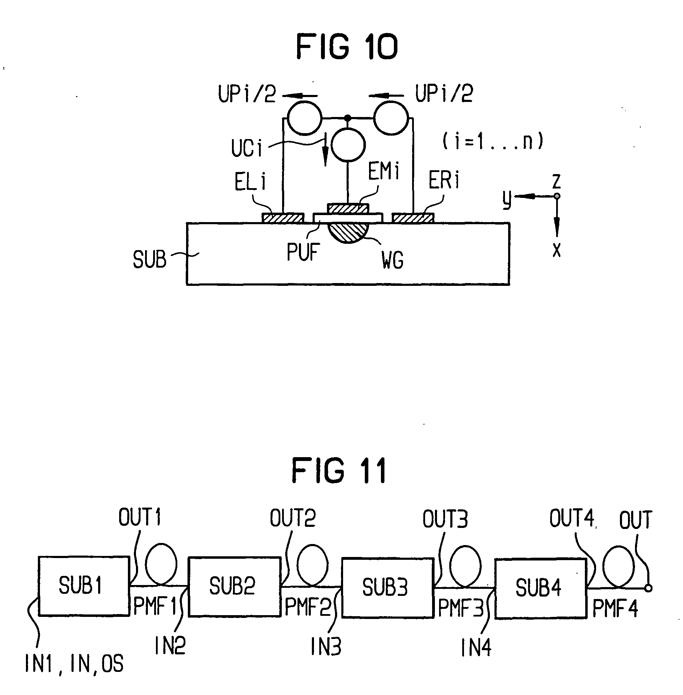

In einem Ausführungsbeispiel nach **Figur 9** (Schnitt: **Figur 10**) besteht der Polarisationstransformator aus einem Lithiumiobatkristall mit X-Schnitt und Z-Ausbreitungsrichtung.
Durch Eindiffusion von Titan wurde im Kristall SUB ein Wellenleiter WG erzeugt. Auf dem Kristall kann - aber muß nicht - eine isolierende Pufferschicht PUF aufgebracht sein, beispielsweise aus Siliziumdioxid. Ebenso wie der Kristall ist sie bei der Betriebswellenlänge transparent. Auf der Pufferschicht oder auf dem Kristall sind leitende Elektroden ELi, EMi, ERi (i = 1 ... n) aufgedampft. Hier sei n = 4, aber auch andere Werte sind möglich. Diese Elektroden können aus Metall, beispielsweise Aluminium bestehen, aber auch aus transparenten leitfähigen Materialien wie Indium-Zinn-Oxid (ITO). Im Ausführungsbeispiel ist die Pufferschicht PUF nur unter der mittleren Elektrode vorhanden. Dies hat den Vorteil, daß Felder, die nur zwischen den äußeren Elektroden ELi, ERi bestehen, keiner DC-Drift unterworfen sind. Eine vergrößerte Dämpfung durch Elektrodenleitfähigkeit tritt nicht oder in nur sehr geringem Maße ein, weil die optische Welle im Bereich der äußeren Elektroden ELi, ERi schon sehr stark abgeklungen ist.

Die Elektroden ELi, EMi, ERi sind segmentiert, so daß 4 Polarisationsstellglieder SBCi (i = 1 ... 4) vorhanden sind. Die Mittelelektroden EMi befinden sich über dem Wellenleiter, linke und rechte Elektroden ELi, ERi sind parallel auf beiden Seiten des Wellenleiters WG angebracht. Einzelne Elektroden verschiedener Segmente können auch miteinander verbunden sein, beispielsweise alle Elektroden EMi. Durch Anlegen entgegengesetzter Spannungen UPi (i = 1 ... 4) zwischen den äußeren Elektroden ERi, ELi wird eine differentielle Phasenverschiebung zwischen den transversal elektrischen (TE-) und den transversal magnetischen (TM-) Wellen erzeugt. Aufgrund unvermeidlicher Wellenleiterdoppelbrechung sind in der Regel von Null verschiedene Spannungswerte UPi0 der Spannungen UPi erforderlich, um Phasenanpassung, d.h. verschwindende TE-TM-Phasenverschiebung zu erzielen. Statt der Z-Ausbreitungsrichtung können deshalb auch andere Ausbreitungsrichtungen gewählt werden, welche sich der Z-Achse bis auf wenige Grade annähern, denn dadurch läßt sich die Wellenleiterdoppelbrechung mit Hilfe des geringfügig doppelbrechenden Kristallschnitts näherungsweise ausgleichen. In der Regel sind trotzdem Spannungswerte UPi0 ungleich Null erforderlich zur Phasenanpassung, den dieser Ausgleich ist i.a. unvollständig.
Legt man an den äußeren Elektroden ELi, ERi gegenüber der Mittelelektrode EMi gleichgerichtete Spannungen UCi (i = 1 ... 4) an, so erhält man TE-TM-Modenkonversion. Bei verschwindender Spannung UCi ist die Modenkonversion idealerweise gleich Null, doch schon bei geringfügiger lateraler Verschiebung der Elektroden in Y-Richtung gegenüber dem Wellenleiter kann dafür eine Spannung UCi0 notwendig sein.
Durch Kombination von entgegen- und von gleichgerichteten Spannungen UPi und UCi läßt sich jede beliebige Kombination von TE-TM-Phasenverschiebung und TE-TM-Modenkonversion erreichen. Man nennt ein solches Polarisationsstellglied auch einen Soleil-Babinet-Kompensator SBC. Die Verzögerung ψi des SBCi ergibt sich durch geometrische Addition der TE-TM-Phasenverschiebung ohne Modenkonversion und der TE-TM-Modenkonversion ohne Phasenverschiebung, also ψi = sqrt((bb * (UCi - UCi0))^2 + (aa * (UPi - UPi0))^2). Die Verzögerung ψi sei im folgenden stets als positiv verstanden; negative Verzögerungen werden durch positive bezüglich vertauschter Eigenmoden dargestellt. Die Konstanten aa, bb sind durch Überlappintegrale zwischen elektrischen und optischen Feldern bestimmt. Ein SBC wirkt als lineare optische Wellenplatte der Verzögerung ψ mit orthogonalen, linear polarisierten Eigenmoden. Der Tangens des Doppelten eines Erhebungswinkels eines dieser Eigenmoden ist proportional zum Verhältnis (bb * (UCi - UCi0)) / (aa * (UPi - UPi0)). Wie bereits bemerkt, ist UCi0 im Idealfall gleich Null.
Zur Polarisationstransformation eines zirkularen in jeden beliebigen Polarisationszustand oder umgekehrt kann ein SBCi eine Verzögerung ψi = 0 ... π aufweisen, siehe IEEE J. Lightwave Techn. 6(1988)7, S. 1199-1207. Es läßt sich noch nachweisen, daß eine Aufteilung eines SBC in mehrere, wobei die Einstellbarkeit der Summe der Verzögerungen dieselbe sei wie die Einstellbarkeit des aufgeteilten SBC, stets ebenfalls die gewünschten Polarisationstransformationen ermöglicht. So können zur Transformation eines zirkularen in jeden beliebigen Polarisationszustand oder umgekehrt beispielsweise auch zwei SBCs mit Verzögerungen von jeweils 0 ... π/2 verwendet werden. Dazu dienen in Figur 9 SBC2 und SBC3. Ausgangsseitig ist ein ähnlich aufgebauter SBC4 vorhanden. Vorzugsweise wirkt er als Viertelwellenplatte mit Eigenmoden, welche parallel bzw. senkrecht zur Chipoberfläche liegen. Um die Baulänge zu minimieren, wird der Wellenleiter WG in oder kurz vor SBC4 um einen Winkel WI gekrümmt. Auf diese Krümmung kann aber auch verzichtet werden. Die Krümmung hat den Vorteil, daß sich auch die Materialdoppelbrechung des Substratmaterials auswirkt, so daß SBC4 eine kürzere Baulänge besitzen kann als SBC2 oder SBC3. In diesem bevorzugten Fall sind bei geeigneter Längenwahl gar keine Elektroden für SBC4 erforderlich, weil das entsprechende Wellenleiterstück schon von selbst als solche Viertelwellenplatte wirkt. Um unvermeidliche, in ihrer Amplitude allerdings in der Regel nicht besonders bedeutende Ungenauigkeiten ausgleichen zu können, sind die kürzeren Elektroden ER4, EM4, EL4 jedoch zweckmäßig und ausreichend. Durch eine Spannung UP4 läßt sich die Verzögerung von SBC4 (mit 0°- und 90°-Eigenmoden) auf den geforderten Wert ψ4=π/2 oder ψ4=-π/2 einstellen. Wegen fehlender Pufferschicht unter Elektroden ER4, EL4 ist diese Spannung nicht oder nur kleiner DC-Drift unterworfen. Eine Spannung UC4 ist nicht erforderlich. Abweichungen von UC4 und UP4 gegenüber diesen Werten können temporär zum Ausgleich nichtidealen Verhaltens von Polarisationstransformatoren oder zu anderen Zwecken durchaus toleriert werden, denn die Zeitkonstanten der DC-Drift sind sehr groß.

Ausgangsseitig ist ein polarisationserhaltender Lichtwellenleiter PMFB angeschlossen, dessen Hauptpolarisationen (Achsen) Winkel von 45° zur Chipoberfläche aufweisen. Da zirkulare Polarisation am Eingang von SBC4 in ±45°-Polarisation am Ende von SBC4 transformiert wird, wirken SBC2, SBC3 als ein Polarisationstransformator, welcher in einem Kompensator von Polarisationsmodendispersion (PMD-Kompensator) eingesetzt werden kann. Aus Symmetriegründen und zur leichteren Ansteuerbarkeit des Polarisationstransformators ist der Eingang des Chip ebenso aufgebaut: Auf einen polarisationserhaltenden Lichtwellenleiter PMFA mit 45°-Winkel zwischen Hauptpolarisationen und Chipoberfläche folgt der unter einem Winkel WI verlaufende, kurze Soleil-Babinet-Kompensator SBC1, dessen Elektroden bei Längen- und Winkelwahl als Viertelwellenplatte wie bei Soleil-Babinet-Kompensator SBC4 auch weggelassen werden könnten. Anschließend folgen die Soleil-Babinet-Kompensatoren SBC2, SBC3. Der Winkel WI zwischen dem Verlauf des Wellenleiters WG im Bereich der SBC2, SBC3 und dem Verlauf in SBC1, SBC4 führt nicht zu Schwierigkeiten bei der Kopplung zu den Lichtwellenleitern PMFA, PMFB, denn die Stirnflächen des Chip können in gewissen Grenzen unter beliebigen Winkeln geschnitten werden. Der Winkel, unter dem die Lichtwellenleiter PMFA, PMFB gegenüber den Wellenleitern in den Soleil-Babinet-Kompensatoren SBC1, SBC4 auftreffen, bestimmt sich aus dem Winkel der Chipstirnflächen, den Brechzahlen und dem Brechungsgesetz.
Der Chip wird so betrieben, daß die Soleil-Babinet-Kompensatoren SBC1, SBC4 als Viertelwellenplatten mit linearen Eigenmoden, welche parallel bzw. senkrecht zur Chipoberfläche verlaufen. SBC2, SBC3 werden zusammen als SBC mit einer zwischen 0 und mindestens π veränderbaren Verzögerung betrieben. Die Segmentierung in SBC2, SBC3 mit Verzögerungen ψ2 = 0 ... mindestens π/2, ψ3 = 0 ... mindestens π/2 bietet wegen der gleichzeitig vorhandenen individuellen Variabilität der Eigenmoden eine bessere Ausgleichsmöglichkeit gegenüber unvermeidlichen Ungenauigkeiten als ein unsegmentierter SBC, doch auf die Segmentierung kann auch verzichtet werden zugunsten einer reduzierten Anzahl von Steuerspannungen. Es können aber auch noch mehr Segmente vorgesehen sein, ggf. mit größeren erreichbaren Gesamtverzögerungen. Je nachdem, ob die PMFA, PMFB unter um 90° gegeneinander versetzten oder unter gleichen Erhebungswinkeln gleicher Hauptpolarisationen an den Stirnflächen des Chip montiert sind, ergibt sich eine Addition oder Subtraktion der differentiellen Gruppenlaufzeiten bei einer Verzögerung von 0. Falls eine der Viertelwellenplatten SBC1, SBC4 durch evtl. unterschiedlich gestaltete Längen und/oder Winkel WI alternativ dazu als Dreiviertelwellenplatte ausgeführt wird, ändert sich die Funktion gerade so, daß Addition und Subtraktion vertauscht werden.
In **Figur 11** ist schließlich ein PMD-Kompensator mit mehreren so aufgebauten Polarisationstransformatoren SUB1 ... SUB4 und dazwischen bzw. nachgeschalteten polarisationserhaltenden Lichtwellenleitern PMF1 ... PMF4 mit differentiellen Gruppenlaufzeiten und unter ±45° zu den Chipoberflächen verlaufenden linear polarisierten Hauptpolarisationen gezeichnet. Gegenüber dem Stand der Technik ergibt sich so eine deutlich reduzierte Baulänge der Polarisationstransformatoren, eine vereinfachte Ansteuerung und vor allem erfindungsgemäß eine bessere Unterdrückbarkeit von DC-Drift. Die Chipeingänge sind IN1 ... IN4, die Chipausgänge sind OUT1 ... OUT4, der Chipeingang IN1 ist gleichzeitig Eingang IN des PMD-Kompensators, der Ausgang OUT des Lichtwellenleiters PMF4 ist Ausgang des PMD-Kompensators. Eine bestimmte, z.B. die langsamere Hauptpolarisation der Lichtwellenleiter PMF1 ... PMF4 ist jeweils an Chipausgängen OUT1, OUT2, OUT3 unter 45°, an Chipeingängen IN2, IN3, IN4 unter -45° bezüglich der γ-Achse einjustiert. Unter der Voraussetzung, daß SBC1 und SBC4 in den Polarisationstransformatoren SUB1 ... SUB4 tatsächlich als Viertelwellenplatten gleicher Eigenmoden arbeiten - dabei bildet SBC1 in SUB1 eine Ausnahme, weil dort kein polarisationserhaltender Lichtwellenleiter angeschlossen ist -, werden deshalb durch SBC1 und SBC4 jeweils die zirkulare Hauptpolarisation am Anfang von SBC4 jedes der Chips SUB1 ... SUB 3 in dieselbe zirkulare Hauptpolarisation am Ende von SBC1 jedes der Chips SUB2 ... SUB4 übergeführt. Dies bedeutet, daß bei Verzögerungen ψ2 = 0 und ψ3 = 0 in jedem der Chips SUB2 ... SUB4 sich die differentiellen Gruppenlaufzeiten der polarisationserhaltenden Lichtwellenleiter PMF1 ... PMF4 addieren.

SBC2 und SBC3 auf jedem der Substrate SUB1 ... SUB4 bilden zusammen je einen Modenwandler Pi (i = 1...m, wobei in Figur 11 m = 4 ist) mit zirkularen Polarisationen als wandelbaren Polarisationen und gleichzeitig Hauptpolarisationen des Wellenleiters bei Abwesenheit von Modenwandlung und gleichzeitig Hauptpolarisationen des benachbarte Modenwandler Pi und P(i+1) verbindenden gesamten Wellenleiters.

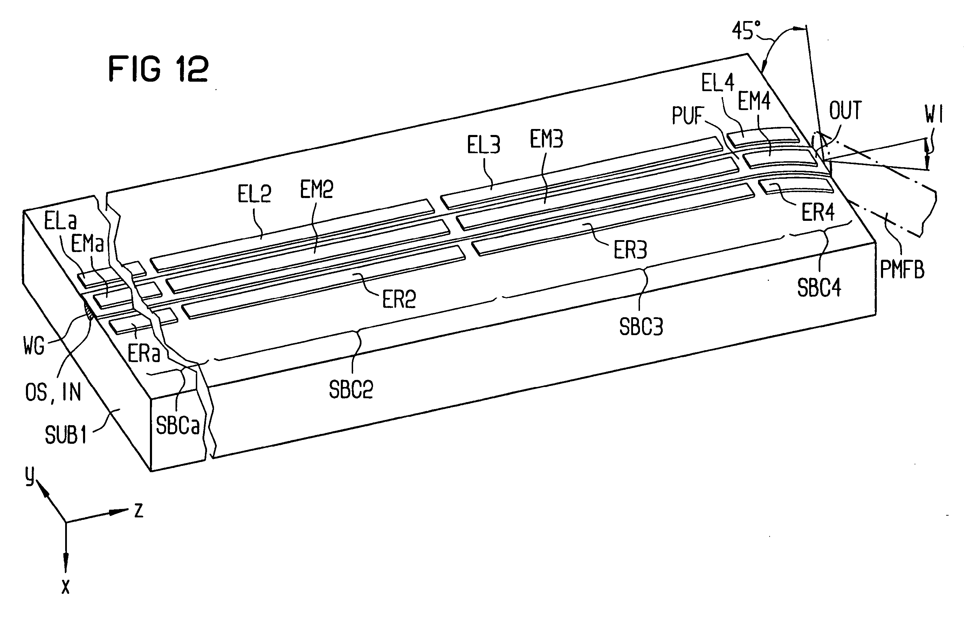

In **Figur 12** ist der Aufbau des Substrats SUB1 zu sehen.
Die Soleil-Babinet-Kompensatoren SBC2, SBC3 bilden dort den Modenwandler zirkularer Polarisationen, und durch den Soleil-Babinet-Kompensator SBC4 ergeben sich am Ausgang von SBC3 zirkulare Hauptpolarisationen des folgenden polarisationsabhängigen Lichtwellenleiters PMF1.
Ein als Viertelwellenplatte arbeitendes Bauelement SBC1 und eine Wellenleiterkrümmung vor SBC2 ist auf dem Substrat SUB1 nicht zweckmäßig oder erforderlich bzw. vorgesehen. Stattdessen ist ein Soleil-Babinet-Kompensator SBCa vorgesehen. Er arbeitet mit voller Modenwandlung als rotierende Wellenplatte mit der Verzögerung ψa = π. Dazu ist erforderlich, daß V1a= Vxa*cos(γa-ϕ(t)/2) und V2a = Vya*cos(γa-αa-ϕ(t)/2), ist, wobei (UPa - UPa0) = V1a, Vxa = π/aa, (UCa - UCa0) = V2a, Vya = π/bb ist. Es wird z.B. ϕ(t) = Ω*t gewählt, wobei Ω wiederum eine niedrige Winkelgeschwindigkeit ist. Gleiche Spannungsfestigkeit der Elektroden vorausgesetzt, ist die Länge des Soleil-Babinet-Kompensators SBCa gleich der Summe der Längen der SBC2, SBC3.
Die Modenwandler SBC2, SBC3 auf den Substraten SUBj (j = 1 ... 4) könnten prinzipiell parallel geschaltet werden. In diesem Fall gilt, daß sie mit Spannungen (UPj - UPj0) = V1j, (UCj - UCj0) = V2j betrieben werden, wobei erfindungsgemäß V1j= Vxj*cos(γj-ϕ(t)) bzw. V2j = Vyj*cos(γj-αj-ϕ(t)); j = 1 ... 4 ist. Eine größere Variabilität gegenüber nichtidealer Realisierung dieser SBC2, SBC3 und anderer Bauelemente erhält man aber dann, wenn man gegenüber diesen Spannungen zusätzliche Variationen zuläßt, die so ausgeführt werden, daß sich stets die gewünschte Polarisationstransformation oder PMD-Kompensation ergibt.
Bei exakter Justage der Elektroden EMj (j = 1 ... 4, a) über den Wellenleitern WG ist UCj0 = 0. Des weiteren liegen unter den Elektroden ELj, ERj keine Pufferschichten, so daß dort auch im Fall UPj0 ungleich 0 keine DC-Drift auftritt. Die einzigen Stellen, an denen DC-Drift normalerweise aufträte, wären die Elektroden EMj. Da diese aber mittelwertfreie Spannungen erhalten, wird DC-Drift auch in diesem Ausführungsbeispiel erfindungsgemäß vermieden.

Statt des Modenwandlers SBCa kann auch ein zirkularer Retarder wie z.B. ein Faraday-Rotator oder eine Drehung des Substrats SUB1 verwendet werden, dessen Phasenverzögerung ϕ(t) zwischen diesen Eigenmoden (und gleichzeitig Hauptpolarisationen der darauf folgenden Lichtwellenleiterstücke) wie schon in früheren Ausführungsbeispielen die Bedingungen erfüllen, daß die Mittelwerte der Funktionen cos(ϕ(t)) und sin(ϕ(t)) verschwinden.

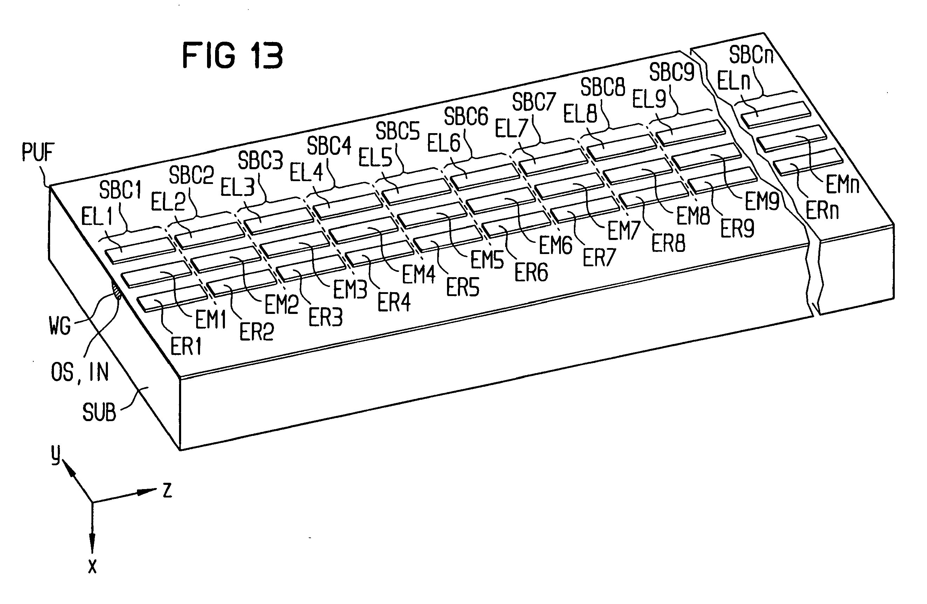

Anhand von **Figur 13** wird eine weitere Klasse von Ausführungsbeispielen der Erfindung erläutert, die jedoch weiterhin auf demselben Erfindungsgedanken beruht.
Ähnlich wie in den Figuren 10 und 12 ist ein Lithiumniobatsubstrat SUB mit X-Schnitt und Z-Ausbreitungsrichtung vorgesehen. Die Pufferschicht PUF ist durchgehend, könnte aber auch so wie in Figur 10 ausgeführt sein oder - bei transparenten Elektroden - ganz entfallen. Ein Wellenleiter WG wird von drei longitudinal segmentierten Elektroden bedeckt bzw. seitlich begleitet. Die Elektroden ELi, EMi, ERi sind so segmentiert, daß n = 8 Polarisationsstellglieder SBCi (i = 1 ... n) vorhanden sind. Die an diese Elektroden angelegten Spannungen sind UPi und UCi gemäß Figur 10. Auch andere Zahlen n sind möglich.

Wie bereits bemerkt, kann zur Polarisationstransformation eines zirkularen in jeden beliebigen Polarisationszustand oder umgekehrt kann ein SBCi eine Verzögerung ψi = 0 ... π aufweisen, siehe Noé, R., Heidrich, H., Hoffmann, D., Endless polarization control systems for coherent optics, IEEE J. Lightwave Techn. 6(1988)7, S. 1199-1207. Er kann wie dort beschrieben durch einen weiteren ergänzt werden. Zur Polarisationstransformation eines linearen in jeden beliebigen Polarisationszustand oder umgekehrt können zwei SBC mit Verzögerungen π/2, π in beliebiger Reihenfolge verwendet werden, also eine elektrooptische drehbare Viertel- und eine Halbwellenplatte.
Zur Transformation jedes beliebigen in jeden beliebigen anderen Polarisationszustand wurden zwei SBCi mit Verzögerungen ψi = 0 ... 2π verwendet, siehe N.G. Walker, G.R. Walker, 'Polarization control for coherent communications', IEEE J. Lightwave Techn. 8(1990), S. 438-458. Zu diesem Zweck lassen sich auch drei SBCs mit Verzögerungen π/2, π, π/2 verwenden, also elektrooptische drehbare Viertel-, Halb- und wiederum Viertelwellenplatte, siehe F. Heismann, M.S. Whalen, 'Fast automatic polarization control system', IEEE Photon. Techn. Lett. 4(1992), S. 503-505. Des weiteren reicht dazu auch ein SBC mit Verzögerung 0 ... π und ein weiterer mit Verzögerung π aus.
Außerdem könne statt einer gefundenen Konfiguration mit Maximalwerten ψimax der Verzögerungen ψi stets auch solche Konfigurationen verwendet werden, bei denen eine oder mehrere Verzögerungen ψi zwischen kleineren Werten oder Null und diesem Maximalwert ψimax frei gewählt werden können. Dies bedeutet, daß zur Transformation jedes beliebigen in jeden beliebigen anderen Polarisationszustand beispielsweise drei SBCs mit Verzögerungen ψ1 = 0 ... π/2, ψ2 = 0 ... π, ψ3 = 0 ... π/2 verwendet werden können oder zwei SBCs mit Verzögerungen ψ1 = 0 ... π, ψ2 = 0 ... π. Ebenso können zur Transformation eines linearen in jeden beliebigen Polarisationszustand oder umgekehrt können zwei SBC mit Verzögerungen ψ1 = 0 ... π/2, ψ2 = 0 ... π in beliebiger Reihenfolge verwendet werden.
Schließlich ermöglicht eine Aufteilung eines SBC in mehrere, wobei die Einstellbarkeit der Summe der Verzögerungen dieselbe sei wie die Einstellbarkeit des aufgeteilten SBC, stets ebenfalls die gewünschten Polarisationstransformationen. So können zur Transformation eines zirkularen in jeden beliebigen Polarisationszustand oder umgekehrt beispielsweise auch zwei, zur Transformation eines linearen in jeden beliebigen Polarisationszustand oder umgekehrt drei und zur Transformation jedes beliebigen in jeden beliebigen anderen Polarisationszustand vier SBCs mit Verzögerungen von jeweils 0 ... π/2 verwendet werden. In jedem Fall können auch weitere SBC hinzugefügt werden.

Betreffend Funktionalität von Polarisationstransformatoren wurde im Tagungsband 3 der European Conference on Optical Communication, 20.-24. September 1998, Madrid, Spanien, auf den Seiten 55, 57 berichtet, daß ein Polarisationstransformator innerhalb eines PMD-Kompensators in der Lage sein solle, eine Hauptpolarisation einer differentiellen Verzögerungssektion in jede beliebige Polarisation endlos umzuformen. Entsprechend dem oben Gesagten ist im Fall zirkularer Hauptpolarisationen dazu ein SBC mit Verzögerung 0 ... π ausreichend. Im Fall linearer Hauptpolarisationen werden dazu z.B. 2 SBC mit Verzögerungen π, π/2 oder 0 ... π, 0 ... π/2 in beliebiger Reihenfolge benötigt. In jedem dieser Fälle ist eine Unterteilung in mehr SBCs oder solche mit individuell oder insgesamt größeren Maximalverzögerungen - wie schon beschrieben - möglich. In der Literaturstelle ist auch die Aufteilung der notwendigen Polarisationstransformation auf mehrere Modenwandler mit unvollständiger Modenwandlung, getrennt durch differentielle Verzögerungssektionen, demonstriert. Aus dem Gesagten ergibt sich, daß mindestens ein Modenwandler wie z.B. ein SBC als Polarisationstransformator verwendet werden kann. Und je mehr Modenwandler oder SBCs vorhanden sind und je größere Verzögerungen diese besitzen, desto funktionell nutzbarer wird der Polarisationstransformator als Teil des PMD-Kompensators.
Im Ausführungsbeispiel der Figur 13 ist der Fall einer allgemeinen Zahl n gezeichnet, doch alle vorgenannten Fälle können durch Weglassen einzelner oder Verbinden benachbarter Soleil-Babinet-Kompensatoren (SBCs) realisiert werden. Bezogen auf den zuvor genannten Fall werden vier solche benachbarte SBCs hier für die normale Polarisationstransformation verwendet. Ein weiteres Beispiel im Fall linearer Hauptpolarisationen sind 2 SBCs mit Verzögerungen π, π/2 oder 0 ... π, 0 ... π/2 in beliebiger Reihenfolge.

Als alternative Ausführungsbeispiele mit allerdings reduzierter Funktionalität sei noch erwähnt, daß entweder die Phasenschieberspannung UPi konstant, z.B. gleich UPi0 oder gleich Null gewählt werden kann, oder daß die Modenkonversionsspannung UCi konstant oder gleich Null gewählt werden kann. Im letztgenannten Fall kann die Elektrode EMi fortgelassen werden. Der Einfachheit halber wird im folgenden stets von SBCs geredet, auch wenn u.U. diese vereinfachten Polarisationsstellelemente verwendet werden können.
Als weitere Ausführungsbeispiele können alle Modenwandler, welche Modenwandlung in Phase und in Quadratur gestatten, verwendet werden. Dies sind insbesondere alle Modenwandler(zellen), ggf. kaskadiert, so daß abwechselnd Kammelektroden, welche Modenwandlung in Phase, und Kammelektroden, welche Modenwandlung in Quadratur erlauben, aufeinanderfolgen, die weiter oben mit den Bezeichnern P1, Pj, Pn, PV1, PVj, PVn, PMCj, PMj eingeführt wurden. Dies ergibt sich daraus, daß Soleil-Babinet-Kompensatoren Modenwandler zirkularer Polarisationen, die vorgenannten Polarisationsstellglieder aber Modenwandler von TE- und TM-Polarisationen sind, jeweils in beiden Quadraturen wählbar.
Die Spannungen UPj (j sei ein Laufindex, ebenso wie i) werden dann durch die Spannungen V1j, die Spannungen UCj durch die Spannungen V2j ersetzt. Ein Soleil-Babinet-Kompensator SBCj kann durch einen Modenwandler PVj oder durch mehrere kaskadierte Modenwandlerzellen Pj oder PMj ersetzt werden.

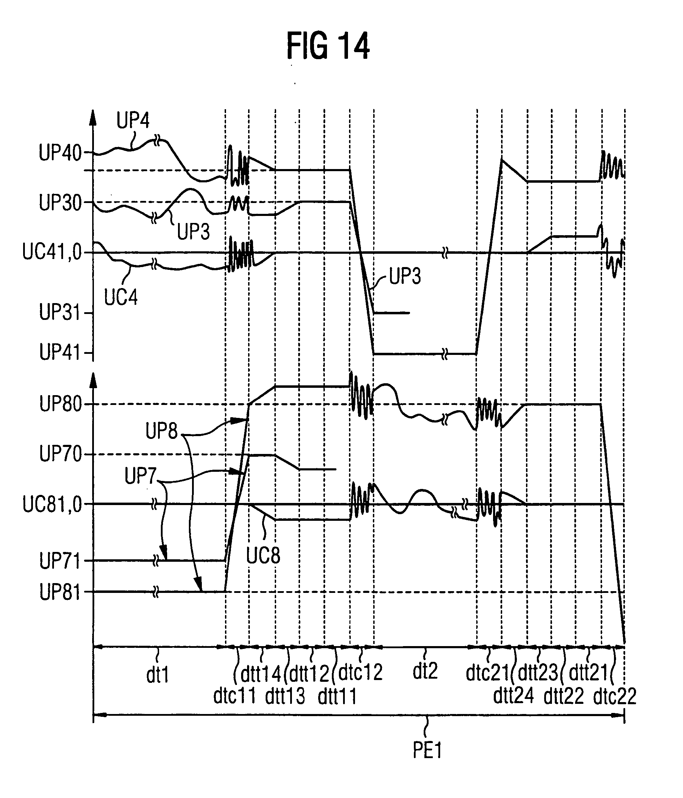

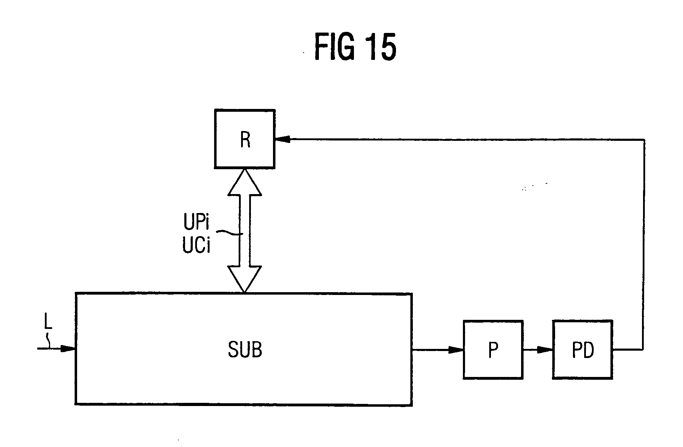

Normalerweise werden die SBCs nicht durch konstante Spannungen betrieben, denn Sinn des Polarisationstransformators ist es i.a., eine variable Polarisation am Ausgang einer Lichtwellenleiter-übertragungsstrecke, in einem Kompensator von Polarisationsmodendispersion und in ähnlichen Anwendungsfällen in andere gewünschte Polarisationen überzuführen, wobei diese Polarisationen i.a. variabel sind. Deshalb wird der Polarisationstransformator normalerweise von variablen Spannungsquellen angesteuert, die ihre Informationen von einem Regler erhalten. Der Regler ist ebenso wie der Polarisationstransformator Teil eines Polarisationsregelsystems. Erfindungsgemäß sind weitere Soleil-Babinet-Kompensatoren SBCi (i = 5 ... 8) entlang des Wellenleiters anschließend an die ersten vier (i = 1 ... 4) vorgesehen. Analoges gilt auch für Polarisationstransformatoren bestehend aus einer anderen ursprünglichen Zahl von Modenwandlern oder SBCs, die auch unterschiedliche Längen besitzten dürfen, unterschiedlichen Maximalverzögerungen entsprechend. Zunächst, im Zeitraum dt1 der **Figur 14**, nehmen die Soleil-Babinet-Kompensatoren SBC1 ... SBC4 normale Polarisationsregelung vor, im folgenden auch Normalbetrieb genannt. Dazu ist wie beim Stand der Technik ein Regler R vorgesehen, welcher die Elektrodenspannungen oder Elektrodenteilspannungen UPi, UCi erzeugt und von einem externen Detektionselement Informationen über den Grad der erreichten Polarisationsanpassung erhält, beispielsweise von einem Photodetektor PD hinter einem Polarisator P. Dies ist in **Figur 15** dargestellt. Als Regler R eignet sich insbesondere ein Mikroprozessor.

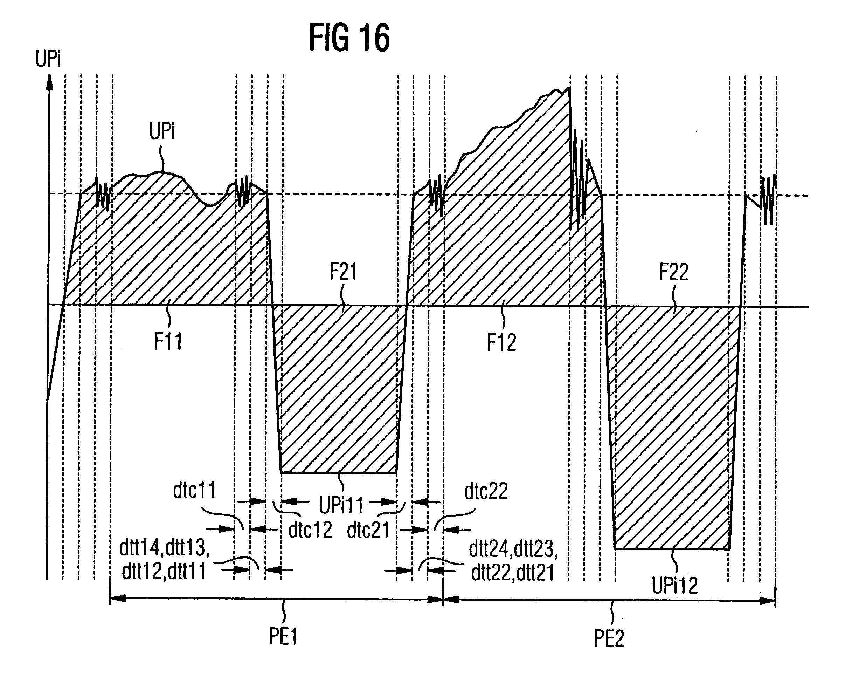

Während des Zeitraums dt1 sind die Elektrodenspannungen der weiteren vier SBC5 ... SBC8 durch Spannungswerte UPi1, UCi1 (i = 5 ... 8) so gewählt, daß sie den im Polarisationsregelungsbetrieb erforderlichen Spannungen entgegengesetzt sind. Der letztere Zustand wird im folgenden Umkehrbetrieb genannt. Dazu wird beispielsweise UPi1 = k * UPi0, UCi1 = k * UCi0 (i = 5 ... 8) gewählt mit einer Konstanten k = -1. Wie bereits bemerkt, ist UCi0 im Idealfall gleich Null. Im daran anschließenden Zeitraum dtc11 werden die entgegengesetzten Elektrodenspannungen langsam so verändert, daß sich Phasenanpassung in SBC5 ... SBC8 mit ψi = 0 (i = 5 ... 8) ergibt, hier also auf UPi = UPi0, UCi = UCi0 (i = 5 ... 8) verschoben. Die dabei entstehenden Störungen der geforderten Polarisationstransformation werden durch Nachregeln der Elektrodenspannungen an SBC1 ... SBC4 ausgeglichen. Im Zeitraum dtc11 kann Phasenanpassung in SBC5 ... SBC8 entweder simultan, oder in verschiedenen der SBC5 ... SBC8 nacheinander eingestellt werden. Wenn Phasenanpassung in SBC5 ... SBC8 erreicht ist, wird die Verzögerung des SBC4 vom gerade vorhandenen Arbeitspunkt ψ4 = ψ40 langsam bis auf ψ4 = 0 verkleinert, und gleichzeitig wird die des SBC8 in demselben Maße von ψ8 = 0 auf ψ8 = ψ40 vergrößert. Dies geschieht im Zeitraum dtt14. Dabei werden gleiche Verhältnisse von TE-TM-Phasenverschiebung und TE-TM-Modenkonversion in beiden SBCs gewählt, so daß gleiche Erhebungswinkel der Eigenmoden vorliegen und SBC8 die Funktion von SBC4 übernimmt. Anschließend übernimmt SBC 7 im Zeitraum dtt13 in analoger Weise die Funktion von SBC3, SBC6 im Zeitraum dtt12 die Funktion von SBC2 und SBC5 im Zeitraum dtt11 die Funktion von SBC1. Wenn dies abgeschlossen ist, liegen an SBC1 ... SBC4 lediglich die Spannungen UPi = UPi0, UCi = UCi0 (i = 1 ... 4) an, die zur Phasenanpassung erforderlich sind. Jetzt werden im Zeitraum dtc12 die Spannungen an SBC1 ... SBC4 langsam so verändert, daß sie den im Polarisationsregelungsbetrieb erforderlichen Spannungen entgegengesetzt sind und Werte UPi1, UCi1 (i = 1 ... 4) annehmen, im einfachsten Fall UPi1 = k * UPi0, UCi1 = k * UCi0 (i = 1 ... 4) mit k = -1. Die dabei entstehenden Störungen der geforderten Polarisationstransformation werden durch Nachregeln der Spannungen an SBC5 ... SBC8 ausgeglichen. Bei Abschluß dieser Veränderungen arbeiten SBC1 ... SBC4 im Umkehrbetrieb. Die Zeiträume dt1 bis dtc12 sind die erste Hälfte einer Periode PE1. In der zweiten Hälfte einer Periode mit Zeiträumen dt2, dtc21, dtt24, dtt23, dtt22, dtt21, dtc22 wird das Verfahren in umgekehrter Richtung und Reihenfolge durchgeführt, wobei sich die Polarisationsregelfunktion von SBC5 ... SBC8 wieder auf SBC1 ... SBC4 zurückverlagert. Diese Perioden PE1, PE2, also dieses Hin- und Her der Elektrodenteilspannungen, werden zyklisch wiederholt. Der Verlauf von Elektrodenteilspannungen UPi, UCi ist in Figur 14 als Funktion der Zeit t gezeichnet.
Am einfachsten ist es, bei Umkehrbetrieb gerade die den Spannungen für Phasenanpassung entgegengesetzten Spannungen UPi = -UPi0, UCi = -UCi0 an die Elektroden eines SBCi anzulegen. Aus Figur 14 ist ersichtlich, daß z.B. UP4 den Wert UP40 näherungsweise während der Zeiten dt1, dtc11, dtt14, dtt13, dtt12, dtt11, den Werte UP41 aber nur während der Zeit dt2 annimmt. Um erfindungsgemäß ein möglichst vollständiges Verschwinden der zeitlichen Mittelwerte der Spannungen zu erreichen, werden UPi1 in einem vorteilhaften Ausführungsbeispiel gleich UPi1 = k * UPi0 (i = 1 ... 8) gewählt, wobei k eine Konstante ist, welche negativer als -1 ist und gleiche Flächen von UPi oberhalb und unterhalb der Null-Linie gewährleistet. Analoges gilt für UCi1 = k * UCi0. In diesem Fall liegt an allen Elektroden im Zeitmittel die Spannung 0 an, weshalb keine DC-Drift entsteht. Sofern dtc11, dtt14, dtt13, dtt12, dtt11, dtc12, dtc21, dtt24, dtt23, dtt22, dtt21, dtc22 klein gegen dt1, dt2 gewählt werden, nähert sich die Konstante k dem Wert -1. Dies ist vorteilhaft, weil dann die erforderliche Spannungsfestigkeit der Elektroden geringer ist.
Die Zeitdauern der Perioden selbst werden so gewählt, daß sie in ähnlicher oder - und das ist sogar günstiger - in kleinerer oder deutlich kleinerer Größenordnung liegen als die Zeitkonstanten der DC-Drift.
Die Aktionen in den Zeitdauern dtt14, dtt13, dtt12, dtt11 können in alternativen Ausführungsbeispielen auch zusammengezogen werden, was die dafür nötige Gesamtzeit erniedrigen kann. Ebensolches gilt für die Aktionen der Zeitdauern dtt24, dtt23, dtt22, dtt21. Beides ist in **Figur 16** skizziert. In weiteren Ausführungsbeispielen können auch die Aktionen der Zeitdauern dtc11, dtc12, dtc21, dtc22 in die der benachbarten Zeitdauern hineingezogen werden, ebenfalls mit dem Zweck verkürzter Ausführungszeit.
Für viele Anwendungsfälle wird die bisher beschriebene Driftreduktion ausreichend sein, quasi gleich einer Driftkompensation zu werten sein. Für Abweichungen von Elektrodenspannungen UPi, UCi von den Werten für Phasenanpassung UPi0, UCi0 im Fall eines von Null verschiedenen ψi während des Normalbetriebs gibt es dabei aber keinen Ausgleich während eines so gestalteten Umkehrbetriebs. Sofern diese Abweichungen über längere Zeiten sich nicht ausmitteln, verbleibt eine gewisse DC-Restdrift.
In einem weiteren Ausführungsbeispiel der Erfindung ermittelt deshalb der Regler R die zeitlichen Integrale der Elektrodenspannungen. Statt Integratoren können auch Tiefpaßfilter mit sehr großen Zeitkonstanten, vorzugsweise deutlich größer als die Dauer der Perioden PE1, PE2, eingesetzt werden. Dies wird im folgenden nicht mehr extra erwähnt. Der Regler R wählt die Spannungswerte UPi1, UCi1, welche im Umkehrbetrieb angefahren und angelegt werden, so, daß sich die Beträge der Integrale der Elektrodenspannungen UPi, UCi verkleinern. Dies ist in Figur 16 am Beispiel des zeitlichen Verlaufs einer Spannung UPi1 über zwei Perioden PE1, PE2 skizziert. Eine erste Spannung UPi11 wird so gewählt, daß das Integral F21 (Fläche mit positivem oder negativem Vorzeichen) gleich dem Negativen des Integrals F11 ist. Die zweite Spannung UPi12 wird so gewählt, daß Integral F22 gleich dem Negativen des Integrals F12 ist. Ein nicht vollständiger Ausgleich des Integrals einer Elektrodenspannung oder eine Überkompensation in der anderen Richtung kann toleriert werden, sofern die Zeitdauern der Perioden klein gegenüber den Zeitkonstanten der DC-Drift sind. Es muß lediglich darauf geachtet werden, daß dieser Ausgleich in der Folgeperiode oder in einer der Folgeperioden in nicht schlechterer oder möglichst sogar besserer Weise erfolgt.
Der Regler R ist vorzugsweise digitaler Natur, so daß die Integrale der Elektrodenspannungen (oder ihre Tiefpaßfilterung) leicht über lange Zeiten mit hoher Genauigkeit gebildet bzw. ausgeführt werden können. Auf diese Weise wird vollständige Driftfreiheit erzielt.
In den anhand der Figuren 13 bis 16 beschriebenen Ausführungsbeispielen der Erfindung wurde der erforderliche Aufwand der Polarisationsregelung zum Zweck der DC-Driftkompensation quasi dupliziert. Die Verdopplung der Anzahl der Modenwandler oder SBCs durch die erfindungsgemäß hinzugefügten ist besonders günstig. Es ist auch möglich eine noch größere Anzahl von Modenwandlern oder SBCs oder anderen Polarisationstransformatoren hinzu zufügen.

In anderen Fällen, wenn die die Elektroden eine Spannungsfestigkeit aufweisen, welche die im normalen Regelbetrieb erforderlichen Spannungen deutlich übersteigt, ist jedoch eine Reduktion des Aufwandes möglich. Es werden weniger neue SBCs (SBC5 ... SBCn) mit 4<n<8 zu den ursprünglichen (SBC1 ... SBC4) hinzugefügt. Dies bedeutet, daß für jeden SBC weniger Zeit im Umkehrbetrieb zur Verfügung steht. Deshalb müssen die Konstanten k stärker negativ gemacht werden.

Während die genannten Ausführungsbeispiele Polarisationstransformatoren in Lithiumniobat betrafen, ist die Erfindung auch für Polarisationtransformatoren in anderen Kristallen, z.B. aus Lithiumtantalat oder aus Halbleitern, und allgemein für alle Polarisationstransformatoren geeignet, die demselben mathematischen Formalismus unterliegen. Deshalb werden in den Patentansprüchen einige vorstehende Begriffe durch andere ersetzt, z.B. SBC durch Polarisationsstellglied, Elektroden durch Steueranschlüsse, Phasenschiebespannung und Modenkonversionsspannungen durch Teilsignale.
Beispielsweise können SBCs ersetzt werden durch andere Modenwandler, und zwar TE-TM-Modenwandler in einem Lithiumniobatkristall mit X-Schnitt und Y-Ausbreitungsrichtung, wie sie in IEEE Journal of Quantum Electronics, Vol. QE-18, Nr. 4, April 1982, Seite 767 bis 771 beschrieben wurden.
Der genannte Polarisationstransformator oder mehrere dieser Polarisationstransformatoren können auch Teil(e) eines Kompensators von optischer Polarisationsmodendispersion sein, vorzugsweise in Verbindung mit Baugruppen zur Erzeugung oder Kompensation einer differentiellen Gruppenlaufzeitdifferenz zwischen zwei orthogonalen Hauptpolarisationen (principal states-of-polarization, PSP).

Im Fall vier ursprünglicher SBCs (SBC1 ... SBC4) mit erreichbaren Verzögerungen von mindestens π/2 oder den genannten anderen Kombinationen zur endlosen Transformation jedes beliebigen in jeden beliebigen anderen Polarisationszustand ist der wechselseitige Umkehrbetrieb durch vier hinzugefügte SBCs (SBC5 ... SBC8) auf jeden Fall möglich. Doch auch in Fällen mit reduzierter Anzahl von SBCs oder Modenwandlern und/oder reduzierten erreichbaren Verzögerungen ist Umkehrbetrieb erreichbar. Dies wird z.B. durch Formeln (7) bis (11) im IEEE J. Lightwave Technology, Band 17, No. 9, 1999, S. 1602-1616 verdeutlicht. Dabei wird die Funktion von einem in Umkehrbetrieb zu bringenden SBC oder Modenwandler zumindest teilweise von einem oder mehreren SBSs oder Modenwandlern übernommen, die diesem nicht direkt benachbart sind, sondern z.B. durch eine oder mehrere differentielle Verzögerungssektionen davon getrennt sind. Beispielsweise kann ein Polarisationstransformator SUB1 der Figur 11, nun im Gegensatz zu vorher bestehend aus 2 SBCs mit erreichbaren Verzögerungen π und π/2 (oder 3 SBCs mit erreichbaren Verzögerungen π/2) durch Kaskade mit weiteren 2 SBCs mit erreichbaren Verzögerungen π und π/2 (oder 3 SBCs mit erreichbaren Verzögerungen π/2) wechselseitigen Umkehrbetrieb gewährleisten. Falls er nicht nur zur Transformation horizontaler oder vertikaler Polarisation in jede beliebige oder umgekehrt eingesetzt wird, sondern wie in Figur 11 gezeichnet Teil eines PMD-Kompensators ist, müssen dabei andere, vorzugsweise die in Lichtausbreitungsrichtung weiter hinten gelegenen, vorzugsweise ebenso aufgebauten Polarisationstransformatoren SUB2, SUB3, SUB4 ebenfalls während der Phasen dtc11, dtc12, dtc21, dtc22 ihre Spannungen UPi', UCi', UPi", UCi", UPi"', UCi"' zwecks Beibehaltung der Gesamtfunktion des optischen PMD-Kompensators verändern. Der in Figur 14 skizzierte Verlauf der Spannungen UP8, UC8 kann deshalb auch der Verlauf einer der Spannungen UPi', UCi', UCi", UPi"', UCi"' auf einem der Polarisationstransformatoren SUB2, SUB3, SUB4 sein.

Wie aus Figur 14 ersichtlich ist, erfordert der Wechsel einzelner SBCs zwischen Normalbetrieb und Umkehrbetrieb in den Perioden dtc11, dtc12, dtc21, dtc22 relativ rasche Variationen der Spannungen an anderen, zu diesen Zeiten für die Polarisationsregelung verantwortlichen SBCs um die Arbeitspunkte UP40, UP30, UC40=0, UP80, UP70, UC80=0 herum.

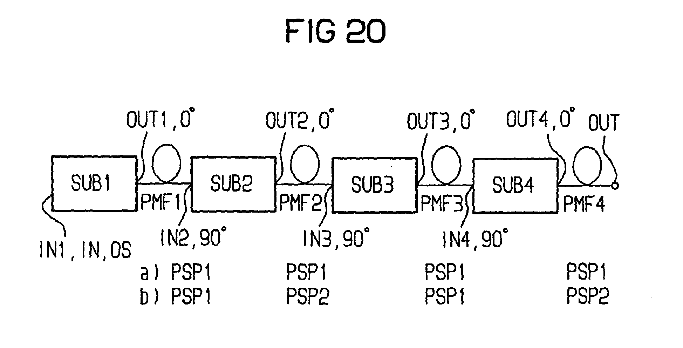

Es ist jedoch eine deutliche Verringerung der Frequenz und Änderungsgeschwindigkeit dieser Variationen möglich, wenn man dafür sorgt, daß das Übergehen eines SBC von Normal- in Umkehrbetrieb oder umgekehrt vom Übergehen eines SBC auf einem anderen Kristallsubstrat von Normal- in Umkehrbetrieb oder umgekehrt wenigstens näherungsweise kompensiert wird. Dies ist in **Figur 20** dargestellt. Die Anordnung ist ähnlich wie Fig. 11. Der PMD-Kompensator wird von Eingang IN bis Ausgang OUT von einem optischen Signal OS durchlaufen.

Jeweils eine bestimmte, z.B. jeweils die langsamere Hauptpolarisation PSP1 der Lichtwellenleiter PMF1, PMF2, PMF3, ist an den Chipausgängen OUT1, OUT2, OUT3 parallel zur Chipoberfläche justiert. An den darauffolgenden Chipeingängen IN2, IN3, IN4 ist dieser PSP1 jeweils senkrecht zur Chipoberfläche einjustiert. Gemäß Figur 13 ist dies die Y-Achse eines LiN-bO3-Kristalls. In Figur 20 ist dies durch die Symbole 0° (für parallel) bzw. 90° (für senkrecht) bei OUT1, OUT2, OUT3 bzw. IN2, IN3, IN4 bezeichnet. Fakultativ dazu kann man PMF4 an OUT4 auch unter 0° (parallel) für PSP1 einjustieren. Wenn die gemäß den Winkeln der Figur 1 einjustierten Hauptpolarisationen in allen Fällen PSP1 sind - dies ist dort in der Zeile a) bezeichnet - so addieren sich die differentiellen Gruppenlaufzeiten der Verzögerungssektionen PMF1, PMF2, PMF3, PMF4 im Ruhezustand der Polarisationstransformatoren SUB2, SUB3, SUB4. Wenn die gemäß den Winkeln der Figur 1 einjustierten Hauptpolarisationen abwechselnd PSP1 und PSP2 sind - dies ist in der Zeile b) bezeichnet - so subtrahieren sich die differentiellen Gruppenlaufzeiten jeweils benachbarter Verzögerungssektionen PMF1, PMF2, PMF3, PMF4 im Ruhezustand der Polarisationstransformatoren SUB2, SUB3, SUB4. Je nach Anwendungsfall kann die erstgenannte oder die zweitgenannte Möglichkeit Vorteile bieten. Auch andere Ausführungen, beispielsweise PSP2, PSP2, PSP1, PSP1 für die Winkeljustagen von PMF1, PMF2, PMF3, PMF4, sind möglich. Weitere Variationen sind denkbar durch Polarisationstransformatoren mit anderen Kristallschnitten.

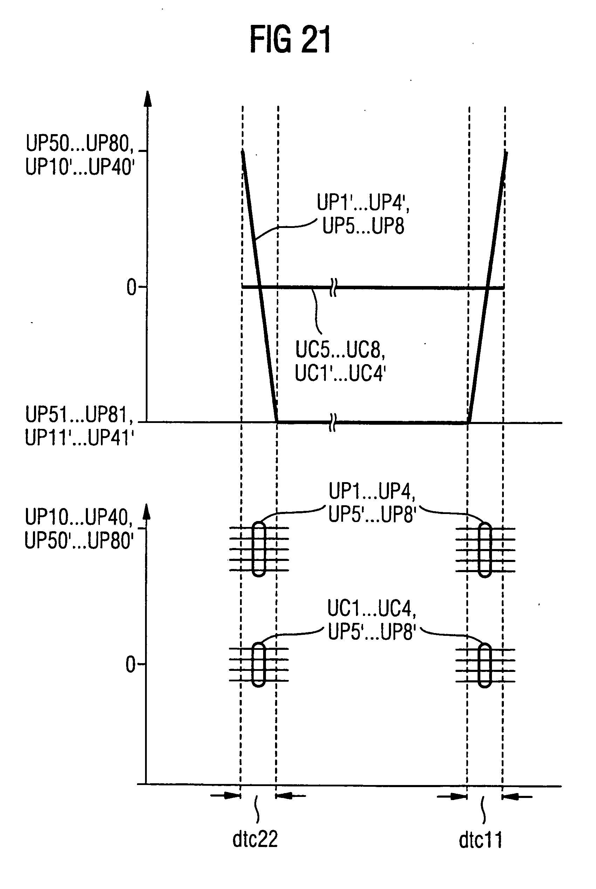

Der besondere Vorteil der Anordnung ist aus **Figur 21** ersichtlich. Die SBCs auf den Polarisationstransformatoren SUB1 ... SUB4 - jeweils aufgebaut gemäß Figur 13 - besitzen bei gleichen Fabrikationsbedingungen zumindest ähnliche intrinsische Doppelbrechungen. Seien die SBCs und Spannungen in bzw. an SUB1 SBCi, UPi, UCi, die in bzw. an SUB2 SBCi', UPi', UCi', die in bzw. an SUB3 SBCi", UPi", UCi", die in bzw. an SUB4 SBCi"' , UPi"', UCi"'. Sei i = 1 ... n. Sei SBC1, SBC1' , SBC1", SBC1"' dem jeweiligen Eingang IN1, IN2, IN3, IN4 zugewandt, während SBCn, SBCn', SBCn'', SBCn''' dem jeweiligen Ausgang OUT1, OUT2, OUT3, OUT4 zugewandt ist. Die Zahl n kann z.B. gleich 8 sein, im Prinzip sind aber wie schon erwähnt alle anderen Zahlen größer als 1 möglich. Der Fall n = 2u bezieht sich auf die Ergänzung eines Polarisationstransformators mit u SBCs durch einen weiteren, ebenso aufgebauten mit ebenfalls u SBCs. Auch ungerade n größer 1 sind aber möglich. Ungleiche Längen der SBCs sind ebenfalls möglich.

Die Spannungen UPi0, UP10', UPi0", UPi0''' sind bei gleichen Fabrikationsbedingungen von SUB1 ... SUB4 etwa identisch. Die Spannungen UCi0, UPi0', UPi0", UPi0''' sind dann auch etwa identisch, etwa gleich Null. Dadurch, daß in PMF1 ... PMF3 jeweils Drehungen um 90° vorgenommen werden, kompensieren sich Änderungen von UP5 ... UP8 mit gleichgerichteten Änderungen von UP1' ... UP4', sofern in den betroffenen SBC5 ... SBC8 und SBC1' ... SBC4' keine Modenkonversion vorliegt. UC5 ... UC8 und UC1' ... UC4' müssen dazu wenigstens näherungsweise gleich Null sein. Analoges gilt für die SBCs vor und hinter PMF2, und für die SBCs vor und hinter PMF3. Der Wechsel zwischen Normal- und Umkehrbetrieb soll deshalb in den SBCs vor und hinter einer differentiellen Verzögerungssektion PMF1 ... PMF3 jeweils zur gleichen Zeit erfolgen. Sind also SBC1 ... SBC4 im Normalbetrieb, so sind es auch SBC5' ... SBC8', SBC1 " ... SBC4'' und SBC5''' ... SBC8'''. Diese Aussage gilt analog für Umkehrbetrieb. Sind SBC5 ... SBC8 im Normalbetrieb, so sind es auch SBC1' ... SBC4', SBC5'' ... SBC8" und SBC1''' ... SBC4'''. Diese Aussage gilt analog für Umkehrbetrieb. Wechsel zwischen Normal- und Umkehrbetrieb von SBC5" ' ... SBC8''' ist wegen der 0°-Justage von PMF4 ohnehin für die PMD-Kompensation normalerweise nicht von Bedeutung. Dies bedeutet, daß idealerweise lediglich Wechsel zwischen Normal- und Umkehrbetrieb von SBC1 ... SBC4 durch SBC5 ... SBC8 ausgeglichen werden muß. Wechsel an SBC5 ... SBC8 und SBCi', SBCi", SBCi"' sind dagegen unschädlich. Infolgedessen können diese Wechsel weitaus schneller durchgeführt werden oder man ist alternativ dazu gegenüber nichtidealem Verhalten der SUB1 ... SUB4 besser gefeit.

Figur 21 zeigt exemplarisch den Wechsel von Normal- zu Umkehrbetrieb und zurück von SBC5 ... SBC8 und SBC1' ... SBC4'. Gleichartige Bauteile SUB1, SUB2 vorausgesetzt, können die Verläufe von UP5 ... UP8, UP1' ... UP4' während des Wechsels dtc22 identisch gewählt werden, und die Spannungen UC5 ... UC8, UC1' ... UC4' können ebenfalls identisch, und zwar gleich Null gewählt werden. In den SBC1 ... SBC4, SBC5'.... SBC8' ist in diesem Idealfall gar keine Spannungsänderung während dtc22 notwendig, was konstante Spannungen UP1 ... UP4, UP5' ... UP8', UC1 ... UC4, UC5' ... UC8' ermöglicht.

Analog dazu erfolgt der Wechsel von Umkehr- zu Normalbetrieb von SBC5 ... SBC8 und SBC1' ... SBC4' in Periode dtc11. Der einzige Unterschied ist, daß wegen des Normalbetriebs der SBC1 ... SBC4, SBC5' ... SBC8' die Spannungen UP1 ... UP4, UP5' ... UP8', UC1 ... UC4, UC5' ... UC8' diesmal i.a. andere konstante Werte annehmen werden.

Sollten die erforderlichen Spannungen und auftretenden Doppelbrechungen nicht identisch sein, so läßt sich wenigstens ein Teil der sonst erforderlichen Änderungen der Spannungen UP1 ... UP4, UP5' ... UP8', UC1 ... UC4, UC5' ... UC8' während dtc22, dtc11 überflüssig machen. Insgesamt verbleibt trotzdem eine deutliche Vereinfachung der Regelvorgänge.

Ein weiterer Vorteil der Ankopplung von PMF1 ... PMF4 an je einem Ende unter 0° und am anderen Ende unter 90° ist die Kompensation der Polarisationsabhängigkeit der Koppeldämpfungen an diesen beiden Enden.

Es gibt auch die Möglichkeit, die PMF1 ... PMF4 nicht jeweils unter 0° und 90° an SUB1 ... SUB4 anzukoppeln, sondern mit paarweise gleichen Orientierungen, z.B. immer 0°. Dazu müssen allerdings SUB1, SUB2, SUB3, SUB4 abwechselnd positive und negative intrinsiche, d.h. im Normalbetrieb mehr oder weniger zu kompensierende Doppelbrechungen aufweisen.

## Patentansprüche

1. Verfahren zur gleichspannungsdriftfreien Polarisationstransformation oder Kompensation von Polarisationsmodendispersion (PMD) mittels eines einen Wellenleiter (WG) und Steuerelektroden (E1j, E2j, ELi, EMi, ERi), die Teil mindestens eines als Wandlerzelle (Pj) oder Soleil-Babinet-Kompensator (SBCi) ausführbaren Polarisationsstellglieds (Pj, SBCi) sind, aufweisenden Polarisationstransformators (K1, K2, K3, SUB, SUB1, SUB2, SUB3, SUB4), wobei den Steuerelektroden Steuerspannungen (V1j, V2j, UPi, UCi) zur Änderung der Polarisation oder der Polarisationsmodendispersion eines optischen Signals (OS) zugeführt werden,
**dadurch gekennzeichnet,**
**daß** als Steuerspannungen (V1j, V2j, UPi, UCi, -V1j, -V2j) wenigstens näherungsweise gleichanteilsfreie Steuerspannungen verwendet werden, wobei die Architektur des Polarisationstransformators und die Steuerspannungen (V1j, V2j, UPi, UCi) so gewählt werden, dass die Funktion der Polarisationstransformation bzw. der Kompensation der Polarisations moden dispersion des Polarisationstransformators (K1, K2, K3, SUB, SUB1, SUB2, SUB3, SUB4) nicht beeinträchtigt wird.

2. Verfahren nach Anspruch 1,
**dadurch gekennzeichnet,**
**daß** eine differentielle Phasenmodulation zweier orthogonaler Hauptpolarisationen des optischen Signals, die mit den Hauptpolarisationen eines Polarisationstransformators (K1, K2, K3) übereinstimmen, im Bereich des Signaleingangs (IN) mit einer stetigen differentiellen Phasenverschiebung ϕ(t) vorgenommen wird, welche so gewählt ist, daß die zeitlichen Mittelwerte ihrer Kosinusfunktion coscϕ(t) und ihrer Sinusfunktion sinϕ(t) wenigstens näherungsweise verschwinden.

3. Verfahren nach Anspruch 2,
**dadurch gekennzeichnet,**
**daß** die differentielle Phasenverschiebung (ϕ(t) zumindest teilweise durch einen ersten differentiellen Phasenmodulator (PH1) dieser Hauptpolarisationen vorgenommen wird.

4. Verfahren nach Anspruch 3,
**dadurch gekennzeichnet,**
**daß** der Phasenmodulator mit einer Modulator-Steuerspannung VP1 = V1*ϕ(t) angesteuert wird, die wenigstens näherungsweise eine lineare Funktion dieser differentiellen Phasenverschiebung ϕ(t) ist.

5. Verfahren nach Anspruch 2,
**dadurch gekennzeichnet,**
**daß** die differentielle Phasenmodulation zumindest teilweise durch einen ersten Modenwandler (Pa) dieser Hauptpolarisationen vorgenommen wird.

6. Verfahren nach Anspruch 5,
**dadurch gekennzeichnet,**
**daß** der erste Modenwandler (Pa) eine volle Modenkonversion durchführt.

7. Verfahren nach Anspruch 5 oder 6,
**dadurch gekennzeichnet,**
**daß** bei der Modenwandlung eine differentielle Phasenverschiebung ϕ(t) zwischen den Hauptpolarisationen erfolgt.

8. Verfahren nach einem der Ansprüche 5 bis 7,
**dadurch gekennzeichnet,**
**daß** der zur Erzeugung dieser differentiellen Phasenmodulation verwendete erste Modenwandler (Pa) mit Modenwandler-Steuerspannungen V1a= Vxa*cos(γa-ϕ(t)/2) bzw. V2a = Vya*cos (γa-αa-ϕ(t)/2) betrieben wird, die wenigstens näherungsweise lineare Funktionen von phasenverschobenen Kosinusfunktionen cos(γa-ϕ(t)/2), cos(γa-αa-ϕ(t)/2) der Hälfte ϕ(t)/2 der differentiellen Phasenverschiebung ϕ(t) sind.

9. Verfahren nach einem der Ansprüche 2 bis 8,
**dadurch gekennzeichnet,**
**daß** die Steuerspannungen V1j= Vxj*cos(γj-ϕ(t)) bzw. V2j = Vyj*cos(γj-αj-ϕ(t)) mit j = 1 ... n verwendet werden, die wenigstens näherungsweise lineare Funktionen von phasenverschobenen Kosinusfunktionen cos(γj-ϕ(t)), cos(γj-αj-ϕ(t)) der differentiellen Phasenverschiebung ϕ(t) sind, und daß zur Änderung der Polarisation oder Kompensation der PMD
die Amplituden Vxj, Vyj und/oder die Phasenwinkel γj dieser Spannungen geändert werden.

10. Verfahren nach einem der Ansprüche 2 bis 9,
**dadurch gekennzeichnet,**
**daß** die Hauptpolarisationen im Bereich einer Wanderzelle (P1, ..., Pn) rechts- und linkszirkulare Polarisationen sind.

11. Verfahren nach einem der Ansprüche 2 bis 9,
**dadurch gekennzeichnet,**
**daß** die Hauptpolarisationen im Bereich einer Wandlerzelle(Pl ... Pn) transversal elektrische und transversal magnetische Polarisationen sind.

12. Verfahren nach einem der vorhergehenden Ansprüche,
**dadurch gekennzeichnet,**
**daß** die Steuerspannungen (V1j, V2j, -V1j, -V2j) mit gleicher Maximalamplitude (V0j) zum Ansteuern der Steuerelektroden (E1j, E2j, EMC11j, EMC12j, EMC21j, EMC22j) einer Wandlerzelle (Pj) verwendet werden.

13. Verfahren nach Anspruch 2,
**dadurch gekennzeichnet,**
**dass** die differentielle Phasenmodulation des optischen Signals (OS) im Bereich des Eingangs im Bereich des Signalausgangs (OUT) durch eine entgegengesetzte differentielle Phasenmodulation -ϕ(t) aufgehoben wird.

14. Verfahren nach Anspruch 2,
**dadurch gekennzeichnet,**
**dass** die differentielle Phasenverschiebung ϕ(t) zeitlich dreiecks-, sinus- oder trapezförmig verläuft.

15. Verfahren nach Anspruch 14,
**dadurch gekennzeichnet**,
eine dreiecksförmige Phasenverschiebung ϕ(t) erfolgt, wobei der maximale Phasenunterschied ±π bzw. 2π oder ein Vielfaches davon beträgt.

16. Verfahren nach einem der Ansprüche 5 bis 8,
**dadurch gekennzeichnet,**
**dass** eine differentielle Phasenverschiebung ϕ(t) = Ω*t erfolgt, wobei die Kreisfrequenz Ω niedrig im Vergleich zu Kreisfrequenzen typischer zu kompensierender Polarisationsänderungen gewählt wird.

17. Verfahren nach einem der vorhergehenden Ansprüche,
**dadurch gekennzeichnet,**
**daß** zum Ansteuern von Phasenmodulatoren oder Modenwandlern oder Wandlerzellen stetig verlaufende mittelwertfreie Steuerspannungen (VP1; V1a, V2a; V1j, V2j -V1j, -V2j) nur teilweise verwendet werden, während als übrige Steuerspannungen von einer Regeleinrichtung (R) erzeugte Regelspannungen (VRij) verwendet werden.

18. Verfahren gemäß Anspruch 1,
**dadurch gekennzeichnet,**
**daß** mindestens ein Polarisationsstellglied (SBC1 ... SBC4) die Polarisationsregelfunktion mindestens eines anderen Polarisationsstellglieds (SBC5 .... SBC8) wenigstens teilweise übernehmen kann und umgekehrt, daß ein Polarisationsstellglied, dessen Polarisationsregelfunktion von einem anderen übernommen worden ist, Steuerspannungen (UP11 ... UP81, UC11 ... UC81) erhalten kann, welche den Steuerspannungen bei Polarisationsregelfunktion (UP10 ... UP80, UC10 ... UC80) entgegengesetzt sind, und daß der zeitliche Mittelwert mindestens einer Steuerspannung (UP1 ... UP8, UC1 ... UC8) wenigstens näherungsweise gleich Null gewählt wird.

19. Verfahren gemäß Anspruch 18,
**dadurch gekennzeichnet,**
**dass** nach Abschluss eines ersten Zeitraums dt1 in einem zweiten Zeitraum dtc11 zweite entgegengesetzte Teilsignale (UP51 ... UP81, UC51 ... UC81) in stetiger Weise in zweite Teilsignale (UP50 ... UP80, UC50 ... UC80) übergeführt werden, dass während darauffolgenden dritten Zeiträumen (dtt14, dtt13, dtt12, dtt11) die Polarisationsregelaufgabe von ersten Polarisationsstellgliedern (SBC1 ... SBC4) auf zweite Polarisationsstellglieder (SBC5 ... SBC8) stetig übertragen wird, dass in einem darauffolgenden vierten Zeitraum (dtc12) erste Teilsignale (UP10 ... UP40, UC10 ... UC40) in stetiger Weise in erste entgegengesetzte Teilsignale (UP11 ... UP41, UC11 ... UC41) übergeführt werden, dass in einem darauffolgenden fünften Zeitraum (dt2) und einem daran anschließenden sechsten Zeitraum (dtc21) die Polarisationsregelaufgabe von diesen zweiten Polarisationsstellgliedern (SBC5 ... SBC8) ausgeführt wird, dass die in ersten bis vierten Zeiträumen (dt1, dtc11, dtt14, dtt13, dtt12, dtt11, dtc12) durchgeführten Verfahrensschritte anschließend in fünften bis achten Zeiträumen (dt2, dtc21, dtc11, dtt24, dtt23, dtt22, dtt21, dtc22) in umgekehrter Richtung und Reihenfolge durchgeführt werden, wobei sich die Polarisationsregelaufgabe von den zweiten Polarisationsstellgliedern (SBC5 ... SBC8) auf die ersten Polarisationsstellglieder (SBC1 ... SBC4) zurückverlagert, und dass die in ersten bis vierten bzw. fünften bis achten Zeiträumen (dt1, dtc11, dtt14, dtt13, dtt12, dtt11, dtc12 bzw. dt2, dtc21, dtc11, dtt24, dtt23, dtt22, dtt21, dtc22) durchgeführten Verfahrensschritte zyklisch wiederholt werden.

20. Verfahren gemäß Anspruch 18 oder 19,
**dadurch gekennzeichnet,**
**daß** ein Regler (R) die entgegengesetzten Teilsignale (UPi11, UPi12, UP11 ... UP81, UC11 ... UC81) so wählt, daß die zeitlichen Integrale (F21+F11, F22+F12) dieser Steuersignale (UP1 ... UP8, UC1 ... UC8) wenigstens näherungsweise verschwinden.

21. Verfahren gemäß einem der Ansprüche 18 bis 20,
**dadurch gekennzeichnet,**
**daß** bei Ausführung einer Verbindung (PMF1, PMF2, PMF3) von ersten Polarisationsstellgliedern (SBC5 ... SBC8, SBC5' ... SBC8', bzw. SBC5'' ... SBC8") mit weiteren Polarisationsstellgliedern (SBC1' ... SBC4', SBC1'' ... SBC4'', bzw. SBC1"' ... SBC4''') in der Art gleicher oder vertauschter Hauptpolarisationen (PSP1, PSP2) Änderungen von Teilsignalen (UP5 ... UP8, UC5 ... UC8) der ersteren unter Beibehaltung der gewünschten Polarisationstransformation durch Änderungen von Teilsignalen (UP1' ... UP4', UC1' ... UC4') der letzteren wenigstens näherungsweise kompensiert werden.

22. Verfahren gemäß Anspruch 21,
**dadurch gekennzeichnet,**
**daß** bei Ausführung dieser Verbindung (PMF1, PMF2, PMF3) in der Art vertauschter Hauptpolarisationen (PSP1, PSP2) Änderungen von Teilsignalen (UP5 ... UP8, UC5 ... UC8) der ersteren und Änderungen von Teilsignalen (UP1' ... UP4', UC1' ... UC4') der letzteren dieselben Polaritäten besitzen.

23. Verfahren gemäß Anspruch 21,
**dadurch gekennzeichnet,**
**daß** bei Ausführung dieser Verbindung (PMF1, PMF2, PMF3) in der Art gleicher Hauptpolarisationen (PSP1, PSP2) Änderungen von Teilsignalen (UP5 ... UP8, UC5 ... UC8) der ersteren und Änderungen von Teilsignalen (UP1' ... UP4', UC1' ... UC4') der letzteren entgegengesetzte Polaritäten besitzen.

24. Verfahren gemäß einem der Ansprüche 18 bis 23,
**dadurch gekennzeichnet,**
**daß** die Anzahl n/2 von Polarisationsstellgliedern (SBC1 ... SBC4), welche die Polarisationsregelfunktion anderer Polarisationsstellglieder (SBC5 .... SBC8) wenigstens teilweise übernehmen können und umgekehrt, gleich der Anzahl n/2 dieser anderen Polarisationsstellglieder (SBC5 .... SBC8) ist.

25. Verfahren gemäß einem der Ansprüche 18 bis 24,
**dadurch gekennzeichnet,**
**daß** die Anzahl n/2 von Polarisationsstellgliedern (SBC1 ...* SBC4), welche die Polarisationsregelfunktion anderer Polarisationsstellglieder (SBC5 .... SBC8) wenigstens teilweise übernehmen können und umgekehrt, zwischen eins und sechs liegt.

26. Verfahren gemäß nach Anspruch 25,
**dadurch gekennzeichnet,**
**daß** diese Anzahl n/2 gleich vier ist.

27. Verfahren gemäß einem der vorstehenden Ansprüche,
**dadurch gekennzeichnet,**
**daß** ein Ausgangssignal eines Polarisationstransformators oder PMD-Kompensators dem Eingang (E1) mindestens eines Polarisationsstrahlteilers (PBS) zugeführt wird, und daß an Ausgängen (OUT1, OUT2) dieses Polarisationsstrahlteilers (PBS) orthogonal polarisierte Teilsignale abgegeben werden.

28. Anordnung zur gleichspannungsdriftfreien Polarisationstransformation oder Kompensation von Polarisationsmodendispersion (PMD) mit einem einen Wellenleiter (WG) und Steuerelektroden (E1j, E2j, ELi, EMi, ERi), die Teil mindestens eines als Wandlerzelle (Pj, PVj) oder Soleil-Babinet-Kompensator (SBCi) ausführbaren Polarisationsstellglieds (Pj, PVj, SBCi) sind, aufweisenden Polarisationstransformator (K1, K2, K3, SUB, SUB1, SUB2, SUB3, SUB4), wobei den steuerelektroden mit Hilfe eines dazu vorgesehenen Mittels (PH1,..., Pa, SBCa, SBC5,..., SBC8) Steuerspannungen (V1j, V2j, UPi, UCi) zur Änderung der Polarisation oder der Polarisationsmodendispersion eines optischen Signals (OS) zugeführt werden,
**dadurch gekennzeichnet,**
**dass** dieses Mittel (PH1, ..., Pa, SBCa, SBC5 bis SBC8) so ausgebildet ist, dass es der Anordnung wenigstens näherungsweise gleichanteilsfreie Steuerspannungen (V1j, V2j, UPi, UCi, -V1j, -V2j) zuführt, wobei die Architektur des Polarisationstransformators und die Steuerspannungen (V1j, V2j, UPi, UCi) so gewählt werden, dass die Funktion der Polarisationtransformation bzw. der Kompensation der Polarisations-modendispersion des Polarisationstransformators (K1, K2, K3, SUB, SUB1, SUB2, SUB3, SUB4) nicht beeinträchtigt wird.

29. Anordnung nach Anspruch 28,
**dadurch gekennzeichnet,**
**daß** dieses Mittel (PH1, ...) ein eingangsseitiger differentieller Phasenmodulator (PH1, ...) ist.

30. Anordnung nach Anspruch 28,
**dadurch gekennzeichnet,**
**daß** dieses Mittel (Pa, SBCa) ein eingangsseitiger erster Modenwandler (Pa, SBCa) ist.

31. Anordnung nach einem der Ansprüche 29 oder 30,
**dadurch gekennzeichnet,**
**daß** ausgangsseitig ein weiterer Phasenmodulator (PH2, ...) oder ein Modenwandler (Pz) vorgesehen ist.

32. Anordnung nach Anspruch 28,
**dadurch gekennzeichnet,**
**daß** dieses Mittel (SBC5 bis SBC8) mindestens ein weiterer Polarisationstransformator (SBC5 bis SBC8) ist, welcher abwechselnd die Funktion eines dieser Polarisationstransformatoren (SBC1 bis SBC4) übernehmen und zur Übernahme dieser Funktion mit entgegengesetzten Steuersignalen angesteuert werden kann.

33. Anordnung nach Anspruch 32,
**dadurch gekennzeichnet,**
**daß** die Anzahl n/2 von Polarisationsstellgliedern (SBC1 ... SBC4), welche die Polarisationsregelfunktion anderer Polarisationsstellglieder (SBC5 .... SBC8) wenigstens teilweise übernehmen können und umgekehrt, gleich der Anzahl n/2 dieser anderen Polarisationsstellglieder (SBC5 .... SBC8) ist.

34. Anordnung nach Anspruch 33,
**dadurch gekennzeichnet,**
**daß** die Anzahl n/2 von Polarisationsstellgliedern (SBC1 ... SBC4), welche die Polarisationsregelfunktion anderer Polarisationsstellglieder (SBC5 .... SBC8) wenigstens teilweise übernehmen können und umgekehrt, zwischen eins und sechs liegt.

35. Anordnung nach Anspruch 34,
**dadurch gekennzeichnet,**
**daß** diese Anzahl n/2 gleich vier ist.

36. Anordnung nach einem der Ansprüche 32 bis 35,
**dadurch gekennzeichnet,**
**daß** eines dieser Polarisationsstellglieder (SBC1 bis SBC8) ein Modenwandler mit endlos abstimmbarer Phasendifferenz zwischen einem modengewandelten und einem nicht modengewandelten Signal ist.

37. Anordnung nach Anspruch 36,
**dadurch gekennzeichnet,**
**daß** eines dieser Polarisationsstellglieder (SBC1 bis SBC8) ein Soleil-Babinet-Kompensator oder ein TE-TM-Modenwandler ist.

38. Anordnung gemäß einem der Ansprüche 28 bis 37,
**dadurch gekennzeichnet,**
**daß** mehrere Polarisationstransformatoren (SUB1, SUB2, SUB3, SUB4) und polarisationserhaltende Lichtwellenleiter (PMF1, PMF2, PMF3, PMF4) abwechselnd aufeinanderfolgen.

39. Anordnung nach einem der Ansprüche 28 bis 38,
**dadurch gekennzeichnet,**
**daß** der Polarisationstransformator (K1, K2, K3, SUB, SUB1, SUB2, SUB3, SUB4) als Lithiumniobatchip ausgeführt ist.

40. Anordnung nach einem der vorhergehenden Ansprüche,
**dadurch gekennzeichnet,**
**daß** ihr mindestens ein Polarisationsstrahlteiler (PBS) nachgeschaltet ist, welcher an seinen Ausgängen (OUT1, OUT2) zueinander orthogonal polarisierte Teilsignale abgeben kann.

## Claims

1. Method for direct voltage drift-free polarisation transformation or polarisation mode dispersion (PMD) compensation by means of a polarisation transformer (K1, K2, K3, SUB, SUB1, SUB2, SUB3, SUB4) having a waveguide (WG) and control electrodes (E1j, E2j, ELi, Emi, Eri) which are part of at least one polarisation control element which can be fashioned as a converter cell (Pj) or Soleil-Babinet compensator (SBCi), wherein control voltages (V1j, V2j, UPi, UCi) are fed to the control electrodes for changing the polarisation or the polarisation mode dispersion of an optical signal (OS),
c h a r a c t e r i s e d i n t h a t
at least approximately DC component-free control voltages are used as control voltages (V1j, V2j, UPi, UCi, -V1j, -V2j), wherein the architecture of the polarisation transformer and the control voltages (V1j, V2j, UPi, UCi) are chosen such that the function of the polarisation transformation or of the polarisation mode dispersion compensation of the polarisation transformer (K1, K2, K3, SUB, SUB1, SUB2, SUB3, SUB4) is not impaired.

2. Method according to claim 1,
**characterised in that**
a differential phase modulation of two orthogonal principal states-of-polarisation of the optical signal which match the principal states-of-polarisation of a polarisation transformer (K1, K2, K3) is performed in the region of the signal input (IN) with a continuous differential phase shift ϕ(t) which is chosen such that the temporal average values of its cosine function cosϕ(t) and its sine function sinϕ(t) vanish at least approximately.

3. Method according to claim 2,
**characterised in that**
the differential phase shift ϕ(t) is performed at least partially by a first differential phase modulator (PH1) of these principal states-of-polarisation.

4. Method according to claim 3,
**characterised in that**
the phase modulator is driven by a modulator control voltage VP1 = V1*ϕ(t) which is at least approximately a linear function of this differential phase shift ϕ(t).

5. Method according to claim 2,
**characterised in that**
the differential phase modulation is performed at least partially by a first mode converter (Pa) of these principal states-of-polarisation.

6. Method according to claim 5,
**characterised in that**
the first mode converter (Pa) carries out a full mode conversion.

7. Method according to claim 5 or 6,
**characterised in that**
in the mode conversion a differential phase shift ϕ(t) between the principal states-of-polarisation takes place.

8. Method according to any one of claims 5 to 7,
**characterised in that**
the first mode converter (Pa) used to generate this differential phase modulation is operated by mode converter control voltages V1a=Vxa*cos(γa-ϕ(t)/2) or V2a =Vya*cos(γa-αa-ϕ(t)/2) which are at least approximately linear functions of phase-shifted cosine functions cos(γa-ϕ(t)/2), cos(γa-αa-ϕ(t)/2) of half ϕ(t)/2 of the differential phase shift ϕ(t).

9. Method according to any one of claims 2 to 8,
**characterised in that**
the control voltages V1j - Vxj*cos(yj-ϕ(t)) and V2j = Vyj*cos(yj-αj-ϕ(t)) with j = 1 ... n are used, which are at least approximately linear functions of phase-shifted cosine functions cos(γj-ϕ(t)), cos(γj-αj-ϕ(t)) of the differential phase shift ϕ(t), and **in that**, to change the polarisation or compensation of the PMD, the amplitudes Vxj, Vyj and/or the phase angles γj of these voltages are changed.

10. Method according to any one of claims 2 to 9,
**characterised in that**
the principal states-of-polarisation in the region of a converter cell (P1, ..., Pn) are right circular and left circular states-of-polarisation.

11. Method according to any one of claims 2 to 9,
**characterised in that**
the principal states-of-polarisation in the region of a converter cell (P1 ... Pn) are transverse electric and transverse magnetic states-of-polarisation.

12. Method according to any one of the preceding claims,
**characterised in that**
the control voltages (V1j, V2j, -V1j, -V2j) are used with the same maximum amplitude (V0j) for driving the control electrodes (E1j, E2j, EMC11j, EMC12j, EMC22j) of a converter cell (Pj).

13. Method according to claim 2,
**characterised in that**
the differential phase modulation of the optical signal (OS) in the region of the input is cancelled in the region of the signal output (OUT) by an opposing differential phase modulation -ϕ(t).

14. Method according to claim 2,
**characterised in that**
the differential phase shift ϕ(t) provisionally has a triangular, sinusoidal or trapezoidal shape.

15. Method according to claim 14,
**characterised in that**
a triangular phase shift ϕ(t) occurs, wherein the maximum phase difference amounts to ±π or 2π or a multiple thereof.

16. Method according to any one of claims 5 to 8,
**characterised in that**
a differential phase shift ϕ(t) = Ω*t occurs, wherein the circular frequency Ω is selected so as to be low in comparison with circular frequencies of typical polarisation changes to be compensated.

17. Method according to any one of the preceding claims,
**characterised in that**
continuously running average-free control voltages (VP1; V1a, V2a; V1j, V2j, -V1j, -V2j) are only partially used for driving phase modulators or mode converters or converter cells, while control voltages (Vrij) generated by a control unit (R) are used as remaining control voltages.

18. Method according to claim 1,
**characterised in that**
at least one polarisation control element (SBC1 ... SBC4) can take over the polarisation control function of at least one other polarisation control element (SBC5 ... SBC8) at least in part and vice versa, that a polarisation control element whose polarisation control function has been taken over by another can receive control voltages (UP11 ... UP 81, UC11 ... UC81) which are the reverse of the control voltages in the polarisation control function (UP10 ... UP 80, UC10 ... UC80), and **in that** the temporal average value of at least one control voltage (UP1 ... UP 8, UC1 ... UC8) is chosen so as to be at least approximately equal to zero.

19. Method according to claim 18,
**characterised in that**
after conclusion of a first period dt1, in a second period dtc11 second opposing partial signals (UP51 ... UP81, UC51 ... UC81) are transposed in a continuous manner into second partial signals (UP50 ... UP80, UC501 ... UC80), **in that** during subsequent third periods (dtt14, dtt13, dtt12, dtt11) the polarisation control function is continuously transferred from first polarisation control elements (SBC1 ... SBC4) to second polarisation control elements (SBC5 ... SBC8), **in that** in a subsequent fourth period (dtc12) first partial signals (UP10 ... UP40, UC10 ... UC40) are transposed in a continuous manner into first opposing partial signals (UP11 ... UP41, UC11 ... UC41), **in that** in a subsequent fifth period (dt2) and a following sixth period (dtc21) the polarisation control function is executed by these second polarisation control elements (SB5 ... SB8), **in that** the method steps implemented in first to fourth steps (dt1, dtc11, dtt14, dtt13, dtt12, dtt11, dtc12) are then implemented in fifth to eighth periods (dt2, dtc21, dtc11, dtt24, dtt23, dtt22, dtt21, dtc22) in the reverse direction and sequence, wherein the polarisation control function is shifted back from the second polarisation control elements (SBC5 ... SBC8) to the first polarisation control elements (SBC1 ... SBC4), and **in that** the method steps implemented in first to fourth and fifth to eighth periods (dt1, dtc11, dtt14, dtt13, dtt12, dtt11, dtc12 and dt2, dtc21, dtc11, dtt24, dtt23, dtt22, dtt21, dtc22) are repeated cyclically.

20. Method according to claim 18 or 19,
**characterised in that**
a controller chooses the opposing partial signals (Upi11, Upi12, UP11 ... UP81, UC11 ... UC81) such that the temporal integrals (F21+F11, F22+F12) of these control signals (UP1 ... UP8, UC1 ... UC8) at least approximately vanish.

21. Method according to any one of claims 18 to 20,
**characterised in that**
when executing a connection (PMF1, PMF2, PMF3) from first polarisation control elements (SBC5 ... SBC8, SBC5' ... SBC8', and SBC5" ... SBC8") to further polarisation control elements (SBC1 ... SBC4, SBC1' ... SBC4', and SBC1" ... SBC4") in the manner of identical or exchanged principal states-of-polarisation (PSP1, PSP2), changes of partial signals (UP5 ... UP8, UC5 ... UC8) of the former are at least approximately compensated for by changes of partial signals (UP1' ... UP4', UC1' ... UC4') of the latter, while retaining the desired polarisation transformation.

22. Method according to claim 21,
**characterised in that**
when executing this connection (PMF1, PMF2, PMF3) in the manner of exchanged principal states-of-polarisation (PSP1, PSP2), changes of partial signals (UP5 ... UP8, UC5 ... UC8) of the former and changes of partial signals (UP1' ... UP4', UC1' ... UC4') of the latter possess the same polarities.

23. Method according to claim 21,
**characterised in that**
when executing this connection (PMF1, PMF2, PMF3) in the manner of equal principal states-of-polarisation (PSP1, PSP2), changes of partial signals (UP5 ... UP8, UC5 ... UC8) of the former and changes of partial signals (UP1' ... UP4', UC1' ... UC4') of the latter possess opposing polarities.

24. Method according to any one of claims 18 to 23,
**characterised in that**
the number n/2 of polarisation control elements (SBC1 ... SBC4) which can take over at least partially the polarisation control function of other polarisation control elements (SBC5 ... SBC8) and vice versa, is equal to the number n/2 of these other polarisation control elements (SBC5 ... SBC8).

25. Method according to any one of claims 18 to 24,
**characterised in that**
the number n/2 of polarisation control elements (SBC1 ... SBC4) which can take over at least partially the polarisation control function of other polarisation control elements (SBC5 ... SBC8) and vice versa, lies between one and six.

26. Method according to claim 25,
**characterised in that**
this number n/2 equals four.

27. Method according to any one of the preceding claims,
**characterised in that**
an output signal of a polarisation transformer or PMD compensator is fed to the input (E1) of at least one polarisation beamsplitter (PBS), and **in that** at outputs (OUT1, OUT2) of this polarisation beamsplitter (PBS) orthogonally polarised partial signals are emitted.

28. Arrangement for the DC drift-free polarisation transformation or polarisation mode dispersion (PMD) compensation, comprising a polarisation transformer (K1, K2, K3, SUB, SUB1, SUB2, SUB3, SUB4) having a waveguide (WG) and control electrodes (E1j, E2j, ELi, EMi, Eri) which are part of at least one polarisation control element (Pj, PVj, SBCi) which can be executed as a converter cell (Pj, PVj) or Soleil-Babinet compensator (SBCi), wherein, with the aid of a means (PH1, ..., Pa, SBCa, SBC5, ..., SBC8) provided for the purpose, control voltages (V1j, V2j, UPi, UPi) are fed to the control electrodes for changing the polarisation or the polarisation mode dispersion of an optical signal (OS),
**characterised in that**
this means (PH1, ..., Pa, SBCa, SBC5 to SBC8) is fashioned such that it feeds at least approximately DC component-free control voltages (V1j, V2j, UPi, UCi, -V1j, -V2j) to the arrangement, wherein the architecture of the polarisation transformer and the control voltages (V1j, V2j, UPi, UCi) are chosen such that the polarisation transformation or PMD compensation function of the polarisation transformer (K1, K2, K3, SUB, SUB1, SUB2, SUB3, SUB4) is not impaired.

29. Arrangement according to claim 28,
**characterised in that**
this means (PH1, ...) is a differential phase modulator (PH1, ...) at the input.

30. Arrangement according to claim 28,
**characterised in that**
this means (Pa, SBCa) is a first mode converter (Pa, SBCa) at the input.

31. Arrangement according to any one of claims 29 or 30,
**characterised in that**
a further phase modulator (PH2, ...) or a mode converter (Pz) is provided at the output.

32. Arrangement according to claim 28,
**characterised in that**
this means (SBC5 to SBC8) is at least one further polarisation transformer (SBC5 to SBC8) which alternately can take over the function of one of these polarisation transformers (SBC1 to SBC4) and can be driven to take over this function by means of reversed control signals.

33. Arrangement according to claim 32,
**characterised in that**
the number n/2 of polarisation control elements (SBC1 ... SBC4) which can take over at least partially the polarisation control function of other polarisation control elements (SBC5 ... SBC8) and vice versa, is equal to the number n/2 of these other polarisation control elements (SBC5 ... SBC8).

34. Arrangement according to claim 33,
**characterised in that**
the number n/2 of polarisation control elements (SBC1 ... SBC4) which can take over at least partially the polarisation control function of other polarisation control elements (SBC5 ... SBC8) and vice versa, lies between one and six.

35. Arrangement according to claim 34,
**characterised in that**
this number n/2 equals four.

36. Arrangement according to any one of claims 32 to 35,
**characterised in that**
one of these polarisation control elements (SBC1 ... SBC8) is a mode converter with endlessly variable phase difference between a mode-converted and a non-mode-converted signal.

37. Arrangement according to claim 36,
**characterised in that**
one of these polarisation control elements (SBC1 ... SBC8) is a Soleil-Babinet compensator or a TE-TM mode converter.

38. Arrangement according to any one of claims 28 to 37,
**characterised in that**
several polarisation transformers (SUB1, SUB2, SUB3, SUB4) and polarisation-maintaining optical waveguides (PMF1, PMF2, PMF3, PMF4) are alternately connected to one another.

39. Arrangement according to any one of claims 28 to 38,
**characterised in that**
the polarisation transformer (K1, K2, K3, SUB, SUB1, SUB2, SUB3, SUB4) is fashioned as a lithium niobate chip.

40. Arrangement according to any one of the preceding claims,
**characterised in that**
at least one polarisation beamsplitter (PBS) is connected downstream thereof, which beamsplitter can emit at its outputs (OUT1, OUT2) mutually orthogonal polarised partial signals

## Revendications

1. Procédé pour la transformation de polarisation sans dérive de tension continue ou la compensation de dispersion de mode de polarisation (PMD) au moyen d'un transformateur de polarisation (K1, K2, K3, SUB, SUB1, SUB2, SUB3, SUB4) présentant un guide d'ondes (WG) et des électrodes de commande (E1j, E2j, ELi, EMi, ERi), qui font partie au moins d'un actionneur de polarisation (Pj, SBCi) réalisable sous forme de cellule de convertisseur (Pj) ou de compensateur de Soleil-Babinet (SBCi), des tensions de commande (V1j, V2j, UPi, UCi) pour la modification de la polarisation ou de la dispersion de mode de polarisation d'un signal optique (OS) étant amenées aux électrodes de commande,
**caractérisé en ce que**
on utilise comme tensions de commande (V1j, V2j, UPi, UCi, -V1j, -V2j) des tensions de commande au moins approximativement sans fraction continue, l'architecture du transformateur de polarisation et les tensions de commande (V1j, V2j, UPi, UCi) étant choisies de telle sorte que la fonction de la transformation de polarisation respectivement de la compensation de la dispersion de mode de polarisation du transformateur de polarisation (K1, K2, K3, SUB, SUB1, SUB2, SUB3, SUB4) n'est pas entravée.

2. Procédé selon la revendication 1,
**caractérisé en ce que**
une modulation de phase différentielle de deux polarisations principales orthogonales du signal optique, qui coïncident avec les polarisations principales d'un transformateur de polarisation (K1, K2, K3), est effectuée dans la zone de l'entrée de signal (IN) avec un déphasage ϕ(t) différentiel continu, qui est choisi de telle sorte que les valeurs moyennes dans le temps de leur fonction cosinus cosϕ(t) et de leur fonction sinus sinϕ(t) disparaissent au moins approximativement.

3. Procédé selon la revendication 2,
**caractérisé en ce que**
le déphasage ϕ(t) différentiel est effectué au moins en partie par un premier modulateur de phase (PH1) différentiel de ces polarisations principales.

4. Procédé selon la revendication 3,
**caractérisé en ce que**
le modulateur de phase est actionné avec une tension de commande de modulateur VP1 = V1*ϕ(t), qui est au moins approximativement une fonction linéaire de ce déphasage (ϕ(t) différentiel.

5. Procédé selon la revendication 2,
**caractérisé en ce que**
la modulation de phase différentielle est effectuée au moins en partie par un premier convertisseur de mode (Pa) de ces polarisations principales.

6. Procédé selon la revendication 5,
**caractérisé en ce que**
le premier convertisseur de mode (Pa) effectue une conversion de mode totale.

7. Procédé selon la revendication 5 ou 6,
**caractérisé en ce que**
un déphasage différentiel ϕ(t) entre les polarisations principales intervient lors de la conversion de mode.

8. Procédé selon l'une quelconque des revendications 5 à 7,
**caractérisé en ce que**
le premier convertisseur de mode (Pa) utilisé pour générer cette modulation de phase différentielle est exploité avec des tensions de commande de convertisseur de mode V1a = Vxa*cos (γa - ϕ(t) / 2) resp. V2a = Vya*cos (γa - αa - ϕ(t) / 2), qui sont des fonctions au moins approximativement linéaires de fonctions cosinus déphasées cos (γa - ϕ(t) / 2), cos (γa - αa - ϕ(t) / 2) de la moitié ϕ(t) / 2 du déphasage différentiel ϕ(t).

9. Procédé selon l'une quelconque des revendications 2 à 8,
**caractérisé en ce que**
les tensions de commande V1j = Vxj*cos (γj - ϕ(t)) ou V2j = Vyj*cos (γj - αj - ϕ(t)) avec j = 1 ... n sont utilisées, lesquelles sont des fonctions au moins approximativement linéaires de fonctions cosinus déphasées cos (γj - ϕ(t)), cos (yj - αj - ϕ(t)) du déphasage différentiel ϕ(t) et **en ce que**, pour la variation de la polarisation ou la compensation des PMD, les amplitudes Vxj, Vyj et/ou les angles de phase γj de ces tensions sont modifiées.

10. Procédé selon l'une quelconque des revendications 2 à 9,
**caractérisé en ce que**
les polarisations principales dans la zone d'une cellule de convertisseur (P1, ..., Pn) sont des polarisations circulaires droite gauche.

11. Procédé selon l'une quelconque des revendications 2 à 9,
**caractérisé en ce que**
les polarisations principales dans la zone d'une cellule de convertisseur (p1, ..., Pn) sont des polarisations transversalement électriques et transversalement magnétiques.

12. Procédé selon l'une quelconque des revendications précédentes,
**caractérisé en ce que**
les tensions de commande (V1j, V2j, -V1j, -V2j) avec une amplitude maximale (V0j) identique sont utilisées pour l'activation des électrodes de commande (E1j, E2j, EMC11j, EMC12j, EMC21j, EMC22j) d'une cellule de convertisseur (Pj).

13. Procédé selon la revendication 2,
**caractérisé en ce que**
la modulation de phase différentielle du signal optique (OS) dans la zone de l'entrée dans la zone de la sortie de signal (OUT) est supprimée par une modulation de phase différentielle opposée -ϕ(t).

14. Procédé selon la revendication 2,
**caractérisé en ce que**
le déphasage différentiel ϕ(t) se présente dans le temps avec une forme triangulaire, sinusoïdale ou trapézoïdale.

15. Procédé selon la revendication 14,
**caractérisé en ce que**
un déphasage ϕ(t) de forme triangulaire intervient, la différence de phase maximale étant égale à ±π respectivement 2π ou un multiple de ces valeurs.

16. Procédé selon l'une quelconque des revendications 5 à 8,
**caractérisé en ce que**
un déphasage différentiel ϕ(t) = Ω*t intervient, la fréquence angulaire Ω étant choisie faible par rapport à des fréquences angulaires de variations de polarisation caractéristiques à compenser.

17. Procédé selon l'une quelconque des revendications précédentes,
**caractérisé en ce que**,
pour l'activation de modulateurs de phase ou de convertisseurs de mode ou de cellule de convertisseur, on utilise seulement partiellement des tensions de commande (VP1 ; V1a, V2a ; V1j ; V2j -V1j, -V2j) sans valeur moyenne et se présentant sous forme continue, alors que des tensions de réglage (VRij) générées par un dispositif de réglage (R) sont utilisées comme autres tensions de commande.

18. Procédé selon la revendication 1,
**caractérisé en ce que**
au moins un actionneur de polarisation (SBC1 ... SBC4) peut assumer au moins partiellement la fonction de réglage de polarisation d'au moins un autre actionneur de polarisation (SBC5 ... SBC8) et inversement, **en ce qu'**un actionneur de polarisation, dont la fonction de réglage de polarisation a été assumée par un autre actionneur, peut recevoir des tensions de commande (UP11 ... UP81, UC11 ... UC81), lesquelles sont opposées aux tensions de commande en cas de fonction de réglage de polarisation (UP10 ... UP80, UC10 ... UC80), et **en ce que** la valeur moyenne dans le temps d'au moins une tension de commande (UP1 ... UP8, UC1 ... UC8) est choisie au moins approximativement égale à zéro.

19. Procédé selon la revendication 18,
**caractérisé en ce que**,
après la fin d'une première période dt1, des seconds signaux partiels (UP51 ... UP81, UC51 ... UC81) opposés sont transformés de façon continue en seconds signaux partiels (UP50 ...UP80, UC50 ... UC80) dans une seconde période (dtc 11), **en ce que**, pendant des troisièmes périodes (dtt14, dtt13, dtt12, dtt11) suivantes, la tâche de réglage de polarisation est transférée continuellement de premiers actionneurs de polarisation (SBC1 ... SBC4) à des seconds actionneurs de polarisation (SBC5 ... SBC8), **en ce que**, dans une quatrième période (dtc12) suivante, des premiers signaux partiels (UP10 ... UP40, UC10 ... UC40) sont transformés de manière continue en premiers signaux partiels (UP11 ... UP41, UC11 ... UC41) opposés, **en ce que**, dans une cinquième période (dt2) suivante et dans une sixième période (dtc21) y consécutive, la tâche de réglage de polarisation est exécutée par ces seconds actionneurs de polarisation (SBC5 ... SBC8), **en ce que** les étapes de procédé effectuées dans des premières à quatrièmes périodes (dt1, dtc11, dtt14, dtt13, dtt12, dtt11, dtc12) sont effectuées ensuite dans des cinquièmes à huitièmes périodes (dt2, dtc21, dtc11, dtt24, dtt23, dtt22, dtt21, dtc22) dans la direction et l'ordre de succession inversés, la tâche de réglage de polarisation étant déplacée des seconds actionneurs de polarisation (SBC5 ... SBC8) aux premiers actionneurs de polarisation (SBC1 ... SBC4) et **en ce que** les étapes de procédé effectuées dans des premières à quatrièmes respectivement cinquièmes à huitièmes périodes (dt1, dtc11, dtt14, dtt13, dtt12, dtt11, dtc12 resp. dt2, dtc21, dtc11, dtt24, dtt23, dtt22, dtt21, dtc22) sont répétées de façon cyclique.

20. Procédé selon la revendication 18 ou 19,
**caractérisé en ce que**
un régulateur (R) choisit les signaux partiels (UPi11, UP112, UP11 ... UP81, UC11 ... UC81) opposés de telle sorte que les intégrales dans le temps (F21+F11, F22+F12) de ces signaux de commande (UP1 ... UP8, UC1 ... UC8) disparaissent au moins approximativement.

21. Procédé selon l'une quelconque des revendications 18 à 20,
**caractérisé en ce que**,
lors de l'exécution d'une liaison (PMF1, PMF2, PMF3) de premiers actionneurs de polarisation (SBC5 ... SBC8, SBC5'... SBC8', resp. SBC5" ... SBC8") avec d'autres actionneurs de polarisation (SBC1' ... SBC4', SBC1'' ... SBC4 ", resp. SBC1" '... SBC4" ') à la façon de polarisations principales (PSP1, PSP2) identiques ou permutées, des modifications de signaux partiels (UP5 ... UP8, UC5 ... UC8) de la première sont compensées au moins approximativement par des modifications de signaux partiels (UP1 ... UP4', UC1' ... UC4') de la dernière avec conservation de la transformation de polarisation souhaitée.

22. Procédé selon la revendication 21,
**caractérisé en ce que**,
en cas d'exécution de cette liaison (PMF1, PMF2, PMF3) à la façon de polarisations principales (PSP1, PSP2) permutées, des modifications de signaux partiels (UP5 ... UP8, UC5 ... UC8) de la première et des modifications de signaux partiels (UP1' ... UP4', UC1' ... UC4') de la dernière présentent les mêmes polarités.

23. Procédé selon la revendication 21,
**caractérisé en ce que**,
en cas d'exécution de cette liaison (PMF1, PMF2, PMF3) à la façon de polarisations principales (PSP1, PSP2) identiques, des modifications de signaux partiels (UP5 ... UP8, UC5 ... UC8) de la première et des modifications de signaux partiels (UP1' ... UP4', UC1' ... UC4') de la dernière présentent des polarités opposées.

24. Procédé selon l'une quelconque des revendications 18 à 23,
**caractérisé en ce que**
le nombre n/2 d'actionneurs de polarisation (SBC1 ... SBC4), qui peuvent assumer au moins partiellement la fonction de réglage de polarisation d'autres actionneurs de polarisation (SBC5 ... SBC8) et inversement, est identique au nombre n/2 de ces autres actionneurs de polarisation (SBC5 .. SBC8).

25. Procédé selon l'une quelconque des revendications 18 à 24,
**caractérisé en ce que**
le nombre n/2 d'actionneurs de polarisation (SBC1 ... SBC4), qui peuvent assumer au moins partiellement la fonction de réglage de polarisation d'autres actionneurs de polarisation (SBC5 ... SBC8) et inversement, se situe entre un et six.

26. Procédé selon la revendication 25,
**caractérisé en ce que**
ce nombre n/2 est égal à quatre.

27. Procédé selon l'une quelconque des revendications précédentes,
**caractérisé en ce que**
un signal de sortie d'un transformateur de polarisation ou d'un compensateur PMD est amené à l'entrée (E1) d'au moins un diviseur de faisceau de polarisation (PBS), et **en ce que** des signaux partiels polarisés perpendiculairement sont délivrés sur des sorties (OUT1, OUT2) de ce diviseur de faisceau de polarisation (PBS).

28. Dispositif pour la transformation de polarisation sans dérive de tension continue ou la compensation de dispersion de modes de polarisation (PMD) avec un transformateur de polarisation (K1, K2, SUB, SUB1, SUB2, SUB3, SUB4) présentant un guide d'ondes (WG) et des électrodes de commande (E1j, E2j, ELi, EMi, ERi), qui font partie d'au moins un actionneur de polarisation (Pj, PVj, SBCi) pouvant être réalisé comme cellule de convertisseur (Pj, PVj) ou compensateur de Soleil-Babinet (SBCi), des tensions de commande (V1j, V2j, UPi, UCi) étant amenées aux électrodes de commande à l'aide d'un moyen (PH1, ..., Pa, SBCa, SBC5 ... SBC8) pour la variation de la polarisation ou de la dispersion de mode de polarisation d'un signal optique (OS),
**caractérisé en ce que**
ce moyen (PH1, ..., Pa, SBCa, SBC5 à SBC8) est réalisé de telle sorte qu'il amène des tensions de commande (V1j, V2j, UPi, UCi, -V1j, -V2j) au moins approximativement sans fraction continue à l'agencement, l'architecture du transformateur de polarisation et les tensions de commande (V1j, V2j, UPi, UCi) étant choisies de telle sorte que la fonction de la transformation de polarisation resp. de la compensation de la dispersion de mode de polarisation du transformateur de polarisation (K1, K2, K3, SUB, SUB1, SUB2, SUB3, SUB4) n'est pas entravée.

29. Agencement selon la revendication 28,
**caractérisé en ce que**
ce moyen (PH1 ...) est un modulateur de phase (PH1, ...) différentiel côté entrée.

30. Agencement selon la revendication 28,
**caractérisé en ce que**
ce moyen (Pa, SBCa) est un premier convertisseur de mode (Pa, SBCa) côté entrée.

31. Agencement selon l'une quelconque des revendications 29 ou 30,
**caractérisé en ce que**
un autre modulateur de phase (PH2, ...) ou un convertisseur de mode (Pz) est prévu côté sortie.

32. agencement selon la revendication 28,
**caractérisé en ce que**
ce moyen (SBC5 à SBC8) est au moins un autre transformateur de polarisation (SBC5 à SBC8), lequel peut assumer alternativement la fonction de l'un de ces transformateurs de polarisation (SBC5 à SBC8) et peut être activé pour la prise en charge de cette fonction avec des signaux de commande opposés.

33. Agencement selon la revendication 32,
**caractérisé en ce que**
le nombre n/2 d'actionneurs de polarisation (SBC1 ... SBC4), qui peuvent assumer au moins partiellement la fonction de réglage de polarisation d'autres actionneurs de polarisation (SBC5 ... SBC8) et inversement, est identique au nombre n/2 de ces autres actionneurs de polarisation (SBC5 ... SBC8).

34. Agencement selon la revendication 33,
**caractérisé en ce que**
le nombre n/2 d'actionneurs de polarisation (SBC1 ... SBC4), qui peuvent assumer au moins partiellement la fonction de réglage de polarisation d'autres actionneurs de polarisation (SBC5 ... SBC8) et inversement, se situe entre un et six.

35. Agencement selon la revendication 34,
**caractérisé en ce que**
ce nombre n/2 est égal à quatre.

36. Agencement selon l'une quelconque des revendications 32 à 35
**caractérisé en ce que**
l'un de ces actionneurs de polarisation (SBC1 à SBC8) est un convertisseur de mode avec différence de phase adaptable de façon continue entre un signal converti au niveau du mode et un signal non converti au niveau du mode.

37. Agencement selon la revendication 36,
**caractérisé en ce que**
l'un de ces actionneurs de polarisation (SBC1 à SBC8) est un compensateur de Soleil-Babinet ou un convertisseur de mode TE-TM.

38. Agencement selon l'une quelconque des revendications 28 à 37,
**caractérisé en ce que**
plusieurs transformateurs de polarisation (SUB1, SUB2, SUB 3, SUB4) et guides d'ondes optiques (PMF1, PMF2, PMF3, PMF4) conservant la polarisation se succèdent de façon alternative.

39. Agencement selon l'une quelconque des revendications 28 à 38,
**caractérisé en ce que**
le transformateur de polarisation (K1, K2, K3, SUB, SUB1, SUB2, SUB3, SUB4) est réalisé sous forme de puce à niobate de lithium.

40. Agencement selon l'une quelconque des revendications précédentes,
**caractérisé en ce que**
au moins un diviseur de faisceau de polarisation (PBS), qui peut délivrer des signaux partiels polarisés perpendiculairement entre eux sur ses sorties (OUT1, OUT2), est branché en aval de cet agencement.
